# EUROPEAN PATENT SPECIFICATION

(11) **EP 2 903 330 B1**
(45) Date of publication and mention of the grant of the patent: **27.06.2018**
(21) Application number: 12888562.1
(22) Date of filing: 15.11.2012
(51) Int. Cl.: H04W 28/08, H04W 4/00, H04W 74/00, H04W 76/00

(54) **DATA TRANSMISSION METHOD, BASE STATION, ACCESS NETWORK DEVICE AND USER EQUIPMENT**
DATENÜBERTRAGUNGSVERFAHREN, BASISSTATION, ZUGANGSNETZVORRICHTUNG UND BENUTZERVORRICHTUNG
PROCÉDÉ DE TRANSMISSION DE DONNÉES, STATION DE BASE, DISPOSITIF DE RÉSEAU D'ACCÈS ET ÉQUIPEMENT UTILISATEUR

(43) Date of publication of application: 05.08.2015
(73) Proprietor: Huawei Technologies Co., Ltd., Longgang District Shenzhen, Guangdong 518129 (CN)
(72) Inventor: LI, Zhiming, Guangdong 518129 (CN); HU, Shuhui, Guangdong 518129 (CN); LIU, Jixing, Guangdong 518129 (CN)
(74) Representative: Pfenning, Meinig & Partner mbB
(86) International application number: PCT/CN2012/084670
(87) International publication number: WO 2014/075263

(56) References cited:
- EP-A1- 2 291 048
- WO-A1-2011/097523
- WO-A1-2012/099762
- CN-A- 102 695 213
- CN-A- 102 761 904
- US-A1- 2011 275 359

## Description

### TECHNICAL FIELD

The present invention relates to the communications field, and in particular, to a data transmission method, a base station, an access network device, and a user equipment.

### BACKGROUND

With the development of communications technologies, the 3rd Generation Partnership Project (The 3rd Generation Partnership Project, 3GPP) standardization develops a completely new evolved network architecture. In this evolved network architecture, a PS (Packet Switch, packet switch) domain is reserved. Therefore, this evolved network architecture is referred to as an evolved packet system (Evolved Packet System, EPS) or System Architecture Evolution (System Architecture Evolution, SAE).

The evolved network architecture can support interworking between different networks. For example, 3GPP and 3GPP2 define an interworking standard for packet data services between a Long Term Evolution (Long Term Evolution, LTE) network and a Code Division Multiple Access (Code Division Multiple Access, CDMA) HRPD (High Rate Packet Data, High Rate Packet Data) network, which supports a UE to access an EPC (Evolved Packet Core, evolved packet core) via the CDMA HRPD, and supports handover of the UE between the two networks. However, in an interworking architecture of packet data services between different networks, a UE can perform data services over only one network at a time, which causes a waste of network resources.

EP2291048A discloses a method and a system of network controllers comprising: simultaneous establishment of radio connections over multiple different Radio Access Technologies (RATs), with a User Equipment or UE; in the method/system, a connection is established for user plane transmission on the same PDP context between a primary network controller 11 of the primary RAT and the secondary network controller 12 of a secondary RAT.

### SUMMARY

Embodiments of the present invention provide a data transmission base station, an access network device, and a user equipment, as defined in the presently independent claims, which can improve a utilization rate of network resources.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of an example of a scenario to which an embodiment of the present invention may be applied;
FIG. 2 is a schematic flowchart of a data transmission method according to an embodiment of the present invention;
FIG. 3 is a schematic flowchart of a data transmission method according to an embodiment of the present invention;
FIG. 4 is a schematic flowchart of a data transmission method according to an embodiment of the present invention;
FIG. 5 is a schematic flowchart of a process of a data transmission method according to an embodiment of the present invention;
FIG. 6 is a schematic diagram of a protocol stack of a first interface and a second interface according to an embodiment of the present invention;
FIG. 7 is a schematic diagram of an example of a data transmission protocol stack according to an embodiment of the present invention;
FIG. 8 is a schematic diagram of another example of a data transmission protocol stack according to an embodiment of the present invention;
FIG. 9 is a schematic diagram of an example of a data transmission process according to an embodiment of the present invention;
FIG. 10 is a schematic flowchart of a process of a data transmission method according to another embodiment of the present invention;
FIG. 11 is a schematic block diagram of a base station according to an embodiment of the present invention;
FIG. 12 is a schematic block diagram of an access network device according to an embodiment of the present invention;
FIG. 13 is a schematic block diagram of a UE according to an embodiment of the present invention;
FIG. 14 is a schematic block diagram of a data transmission system according to an embodiment of the present invention;
FIG. 15 is a schematic block diagram of an example of a data transmission system according to an embodiment of the present invention;
FIG. 16 is a schematic block diagram of a base station according to an embodiment of the present invention;
FIG. 17 is a schematic block diagram of an access network device according to an embodiment of the present invention; and
FIG. 18 is a schematic block diagram of a UE according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as: a Global System for Mobile Communications (Global System of Mobile communication, GSM), a Code Division Multiple Access (Code Division Multiple Access, CDMA) system, a Wideband Code Division Multiple Access (Wideband Code Division Multiple Access Wireless, WCDMA) system, a general packet radio service (General Packet Radio Service, GPRS) system, and a Long Term Evolution (Long Term Evolution, LTE) system.

A user equipment (User Equipment, UE) may also be called a mobile terminal (Mobile Terminal, MT), a mobile user equipment, and the like, and may communicate with one or more core networks through a radio access network (for example, Radio Access Network, RAN). The user equipment may be a mobile terminal, such as a mobile phone (also referred to as a "cellular" phone) or a computer with a mobile terminal. For example, the user equipment may be a portable, pocket-sized, handheld, computer built-in, or in-vehicle mobile apparatus.

A base station may be a base station (BTS, Base Transceiver Station) in GSM or CDMA, or may be a base station (Node B) in WCDMA, or may be an evolved NodeB (evolved Node B, or eNB, or e-NodeB) in LTE, which is not limited in the present invention. However, for ease of description, the following embodiments are described by using a Node B as an example.

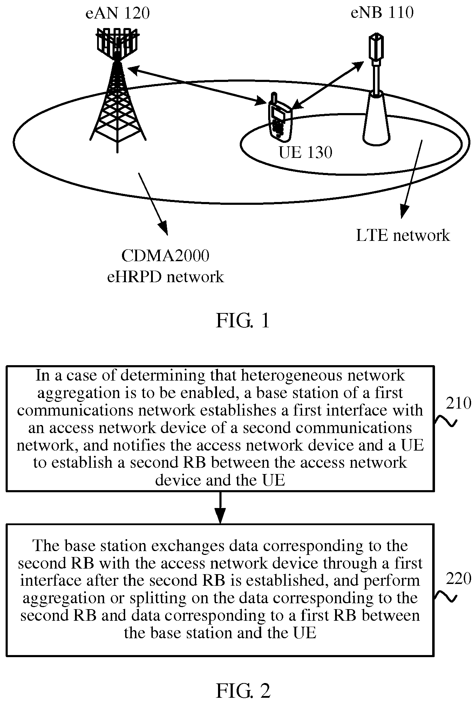

FIG. 1 is a schematic diagram of an example of a scenario to which an embodiment of the present invention may be applied. It should be noted that, the example in FIG. 1 is merely intended to help a person skilled in the art better understand this embodiment of the present invention, rather than to limit the scope of this embodiment of the present invention.

Networks of different standards may have a common coverage area. For example, as shown in FIG. 1, an eNB 110 may belong to an LTE network, an eAN (evolved Access Net, evolved Access Net) 120 may belong to a CDMA2000 eHRPD (evolved High Rate Packet Data, evolved High Rate Packet Data) network, and a coverage area of the eNB 110 may be located within a coverage area of the eAN 120.

If it is assumed that a UE 130 and the eNB 110 are currently in a connected state, the eNB 110 may perform data transmission with the UE 130. Meanwhile, the UE 130 is also located within the coverage area of the CDMA2000 eHRPD network; therefore, according to this embodiment of the present invention, by means of heterogeneous network aggregation, the eAN 120 may also perform data transmission with the UE 130 at the same time without handing over the UE 130.

It should be understood that, although FIG. 1 shows that the coverage area of the eNB 110 is located within the coverage area of the eAN 120, in this embodiment of the present invention, the coverage area of the eNB 110 and the coverage area of the eAN 120 may also partially overlap, or may overlap in another manner, which are not limited in this embodiment of the present invention.

FIG. 2 is a schematic flowchart of a data transmission method according to an embodiment of the present invention. The method in FIG. 2 is performed by a base station of a first communications network, which, for example, may be the eNB 110 in FIG. 1.

210. In a case of determining that heterogeneous network aggregation is to be enabled, the base station of the first communications network establishes a first interface with an access network device of a second communications network, and notifies the access network device and a UE to establish a second radio bearer (Radio Bearer, RB) between the access network device and the UE.

220. The base station exchanges data corresponding to the second RB with the access network device through a first interface after the second RB is established, and perform aggregation or splitting on the data corresponding to the second RB and data corresponding to a first RB between the base station and the UE.

The data that corresponds to the second RB and is exchanged by the base station with the access network device through the first interface is Packet Data Convergence Protocol (Packet Data Convergence Protocol, PDCP) protocol data units (Protocol Data Unit, PDU).

In this embodiment of the present invention, heterogeneous network aggregation may refer to aggregation performed on networks of different standards, and by means of heterogeneous network aggregation, the UE may receive and transmit data in different networks at the same time.

The base station may determine, according to capability information of the UE or other related information, whether heterogeneous network aggregation is to be enabled. For example, the other related information may include current signal strength that is of the first communications network and reported by the UE, information about a current location of the UE, a load degree of the base station, load information of a cell of the access network device, and the like.

In a case of determining that heterogeneous network aggregation is to be enabled, the base station may establish the first interface with the access network device of the second communications network, and notify the access network device to establish the second RB with the UE. In addition, the base station may also notify the UE to establish the second RB with the access network device. Therefore, after the second RB is established, the base station may perform aggregation or splitting on the data corresponding to the second RB and the data corresponding to the first RB between the base station and the UE. The first RB may have been in existence. For example, before heterogeneous network aggregation is determined, the UE may have been connected to the first communications network, and the first bearer may have been established between the base station and the UE. The base station may exchange the data corresponding to the second RB with the access network device through the first interface.

For example, in a downlink direction, after acquiring data to be sent to the UE, the base station may split the data to the first RB and the second RB, that is, one part of the data is transmitted to the UE over the first RB, and the other part of the data is transmitted to the UE over the second RB. The base station may process the part of data that needs to be transmitted over the second RB to be PDCP PDUs, and then transmit the PDCP PDUs to the access network device through the first interface, and the access network device may forward the part of the data to the UE over the second RB.

In an uplink direction, the UE may send data to the base station over the first RB, and may also send data to the access network device over the second RB. After receiving the data sent by the UE over the second RB, and processing the data to be PDCP PDUs, the access network device may send the PDCP PDUs to the base station over the first interface. The base station may perform aggregation on the data received over the first RB and the data received over the second RB.

In this embodiment of the present invention, in a case of determining that heterogeneous network aggregation is to be enabled, a base station of a first communications network establishes a first interface with an access network device of a second communications network, and notifies the access network device and a UE to establish a second RB between the access network device and the UE, so that the base station can perform aggregation or splitting on data corresponding to the second RB and data corresponding to a first RB between the base station and the UE, and it can be implemented that the UE performs data transmission in two communications networks at the same time, and therefore, a utilization rate of network resources can be improved, and a data transmission rate and a peak rate of the UE can be improved.

In addition, in the prior art, a handover is required to implement interworking between two different networks; however, in this embodiment of the present invention, because the UE establishes a RB with both the two networks, there is no need to perform a handover between the two networks for the UE, so that a signaling procedure can be reduced and a risk of a handover failure can be reduced. Meanwhile, resources of the two networks can be scheduled according to dynamic load states of the two networks, so as to implement more efficient load balancing.

In addition, because the UE establishes a bearer with both the two networks, user experience can be significantly enhanced. For example, in FIG. 1, when a coverage area of an eAN 120 is larger than a coverage area of an eNB 110, and the UE is located at an edge of the coverage area of the eNB 110, after a CDMA2000 eHRPD network and an LTE network are aggregated by means of heterogeneous network aggregation in this embodiment of the present invention, user experience of the UE can be significantly enhanced without adding a site outside the LTE network.

Optionally, in an embodiment, the first communications network may be an LTE network, and the second communications network may be a non-LTE network.

For example, the second communications network may be the CDMA2000 eHRPD shown in FIG. 1, or may be a CDMA HRPD network. In addition, the second communications network may further be another non-LTE network, which is not limited in this embodiment of the present invention.

Optionally, in another embodiment, in step 210, the base station may send a connection reconfiguration request message to the UE, and send a negotiation message to the access network device through a second interface, where the connection reconfiguration request message may be used to instruct to establish the second RB, the negotiation message may include data plane information, of the base station, on the first interface, and the negotiation message may be further used to instruct to establish the second radio bearer. The base station may receive, through the second interface, an acknowledgment message generated by the access network device according to the negotiation message, where the acknowledgment message may include data plane information, of the access network device, on the first interface.

The first interface may be a data plane interface between the base station and the access network device, and the second interface may be a signaling plane interface between the base station and the access network device. The base station and the access network device may exchange their respective data plane connection information on the first interface through the second interface, so as to establish the first interface between the base station and the access network device. For example, in the scenario shown in FIG. 1, if the access network device is the eAN 120 and the base station is the eNB 110, the first interface may use a mechanism that is the same as that of an HRPD system A10 interface, so as to support multiple data plane connections. Data plane connection information, of the eNB 110, on the first interface may include: a UDP (User Datagram Protocol, User Datagram Protocol) port number (Port Number) of the eNB 110, an IP (Internet Protocol, Internet Protocol) address of the first interface of the eNB 110, and a GRE (Generic Routing Encapsulation, Generic Routing Encapsulation) key (eNB→eAN). Data plane connection information, of the eAN 120, on the first interface may include: a UDP port number (Port Number) of the eAN 120, an IP address of the first interface of the eAN 120, and a GRE key (eAN→eNB). The GRE key may be used to distinguish different IP flows (flow).

Optionally, in another embodiment, before step 210, the base station may determine a mapping relationship between an Internet Protocol (Internet Protocol, IP) flow and the second RB. The base station may add the mapping relationship to the connection reconfiguration request message.

The base station may determine the mapping relationship between an IP flow and the second RB, where the mapping relationship may indicate which IP flow shall be transmitted over the second RB. The base station may notify the UE of the mapping relationship by using the connection reconfiguration request message.

Optionally, in another embodiment, in step 220, the base station may receive, over the first RB, data packets that are of a first IP flow and are sent by the UE, and receive a second part of PDCP PDUs from the access network device through the first interface, where the second part of PDCP PDUs may be obtained by performing decapsulation processing, by the access network device, on a second part of encapsulated data packets sent by the UE over the second RB, where the second part of encapsulated data packets may be obtained by performing encapsulation processing, by the UE, on data packets of a second IP flow, and the second IP flow corresponds to the second RB in the mapping relationship. The base station may perform processing on the data packets of the first IP flow to obtain a first part of PDCP PDUs. The base station may perform aggregation on the first part of PDCP PDUs and the second part of PDCP PDUs.

Specifically, in the mapping relationship, the second IP flow corresponds to the second RB. The UE may obtain the second part of encapsulated data packets after performing corresponding processing on the data packets of the second IP flow, and send the second part of encapsulated data packets to the access network device over the second RB. After performing decapsulation processing on the second part of encapsulated data packets, the access network device may obtain the second part of PDCP PDUs, and send the second part of PDCP PDUs to the base station through the first interface. Meanwhile, the UE may send the data packets of the first IP flow to the base station over the first RB. For example, the UE may send the data packets of the first IP flow to the base station according to a protocol standard of the LTE network in the prior art. For example, the IP data packets of the first IP flow may be sent to the base station after being encapsulated and processed at a Radio Link Control (Radio Link Control, RLC) layer, a Media Access Control (Media Access Control, MAC) layer, and a physical (Physical, PHY) layer.

After obtaining the data packets of the first IP flow, the base station may perform processing to obtain the first part of PDCP PDUs. For example, the base station may obtain the first part of PDCP PDUs after performing decapsulation processing on the data packets of the first IP flow at the PHY layer, the MAC layer, and the RLC layer. Then, aggregation is performed on the first part of PDCP PDUs and the second part of PDCP PDUs at a PDCP layer.

Optionally, in another embodiment, in step 220, the base station may acquire a third IP flow and a fourth IP flow that need to be transmitted to the UE, where the third IP flow corresponds to the second RB in the foregoing mapping relationship. The base station processes data packets of the third IP flow to obtain a third part of PDCP PDUs. The base station may send the third part of PDCP PDUs to the access network device through the first interface, and send data packets of the fourth IP flow to the UE over the first RB.

Specifically, the base station may acquire, from a serving gateway (Serving Gateway, SGW) the third IP flow and the fourth IP flow that need to be transmitted to the UE. The third IP flow corresponds to the second RB in the foregoing mapping relationship; therefore, the third IP flow needs to be sent to the UE over the second RB. Therefore, the base station may perform processing on the data packets of the third IP flow to obtain the third part of PDCP PDUs, and then send the third part of PDCP PDUs to the access network device through the first interface. Meanwhile, the base station may send the data packets of the fourth IP flow to the UE over the first RB. The base station may send the data packets of the fourth IP flow to the UE according to the protocol standard of the LTE network in the prior art.

Optionally, in another embodiment, in step 220, the base station may receive, over the first RB, a fifth part of encapsulated data packets sent by the UE, and may receive a sixth part of PDCP PDUs from the access network device through the first interface, where the sixth part of PDCP PDUs are obtained by performing processing, by the access network device, on a sixth part of encapsulated data packets sent by the UE over the second radio bearer. The base station may process the fifth part of encapsulated data packets to obtain a fifth part of PDCP PDUs. The base station may aggregate the fifth part of PDCP PDUs and the sixth part of PDCP PDUs.

Specifically, the UE may divide PDCP PDUs that need to be transmitted to the base station into two parts, that is, the fifth part of PDCP PDUs and the sixth part of PDCP PDUs, according to quintuple information, such as source IP addresses, destination IP addresses, source ports, destination port numbera, and upper-layer protocol numbers, of the PDCP PDUs, or according to information such as current load of the base station and the access network device, or further according to a quality of service (Quality of Service, QoS) requirement of an IP flow to which the PDCP PDUs that need to be transmitted to the base station belong and a QoS parameter of the second RB.

Because an IP flow has a QoS requirement, after determining that the QoS parameter of the second RB can meet a QoS requirement of an IP flow to which the sixth part of PDCP PDUs belongs, the UE may determine that the sixth part of PDCP PDUs shall be transmitted to the base station over the second RB, so that it can be ensured that the sixth part of PDCP PDUs are normally transmitted over the second RB. Therefore, before the data is transmitted, the base station may also notify, by using the connection reconfiguration message, the UE of data packets of an IP flow that can be transmitted over the second RB. For example, an IP flow of a BE (best effort) type does not have a QoS requirement, and data packets of an IP flow of this type can be transmitted over the second RB. For another example, if QoS of the second RB is a long delay and a low bit error rate, accordingly, only data packets of an IP flow of which a QoS requirement is the long delay and the low bit error rate can be transmitted over the second RB.

In addition, the UE may determine that the fifth part of PDCP PDUs are to be sent to the base station over the first RB. The UE may perform encapsulation processing on the fifth part of PDCP PDUs to obtain the fifth part of encapsulated data packets. The base station may receive the fifth part of encapsulated data packets over the first RB, and perform processing on the fifth part of encapsulated data packets to obtain the fifth part of PDCP PDUs. The base station may perform decapsulation processing on the fifth part of encapsulated data packets according to the protocol standard of the LTE network in the prior art, to obtain the fifth part of PDCP PDUs.

Meanwhile, the UE may perform encapsulation processing on the sixth part of PDCP PDUs to obtain the sixth part of encapsulated data packets, and send the sixth part of encapsulated data packets to the access network device over the second RB. The access network device may perform decapsulation processing on the sixth part of encapsulated data packets to obtain the sixth part of PDCP PDUs, so as to send the sixth part of PDCP PDUs to the base station through the first interface. In this way, the base station may perform aggregation on the fifth part of PDCP PDUs and the sixth part of PDCP PDUs at the PDCP layer. For example, the base station may send the two parts of PDCP PDUs to an upper layer after sorting them according to sequence number (Sequence Number, SN) information included in PDCP PDUs in the fifth part of PDCP PDUs and SN information of PDCP PDUs in the sixth part of PDCP.

It should further be noted that, in step 220, an execution order of the two processes of receiving, by the base station, the fifth part of encapsulated data packets over the first RB and receiving the sixth part of PDCP PDUs through the first interface should be determined according to functions of the base station and internal logic of the two processes, and the foregoing description should not be construed as any limitation on the implementation process of this embodiment of the present invention.

Optionally, in another embodiment, in step 220, the base station may divide PDCP PDUs that need to be transmitted to the UE into a seventh part of PDCP PDUs and an eighth part of PDCP PDUs. The base station may send the seventh part of PDCP PDUs to the access network device through the first interface, obtain an eighth part of encapsulated data packets after performing processing on the eighth part of PDCP PDUs, and send the eighth part of encapsulated data packets to the UE over the first RB.

For example, the base station may divide the PDCP PDUs that need to be transmitted to the UE into the seventh part of PDCP PDUs and the eighth part of PDCP PDUs according to quintuple information, such as source IP addresses, destination IP addresses, source ports, destination port numbers, and upper-layer protocol numbers, of the PDCP PDUs, or information such as current load of the base station and the access network device, or further according to a QoS requirement of an IP flow to which the PDCP PDUs that nees to be transmitted to the UE belong and a QoS parameter of the second RB.

Because an IP flow has a QoS requirement, after determining that the QoS parameter of the second RB can meet a QoS requirement of an IP flow to which the seventh part of PDCP PDUs belongs, the UE may determine that the seventh part of PDCP PDUs shall be transmitted to the UE over the second RB, so that it can be ensured that the seventh part of PDCP PDUs are normally transmitted over the second RB.

Meanwhile, the base station may determine that the eighth part of PDCP PDUs are to be transmitted to the UE over the first RB. In this case, the base station may perform encapsulation processing on the eighth part of PDCP PDUs, for example, the encapsulation may be performed according to the protocol standard of the LTE network in the prior art, for example, obtaining the eighth part of encapsulated data packets after encapsulation processing at the RLC layer, the MAC layer, and the PHY layer, so as to send the eighth part of encapsulated data packets to the UE over the first RB.

In addition, the base station may add SN information to a PDCP PDU, so that the UE sorts PDCP PDUs that can be received.

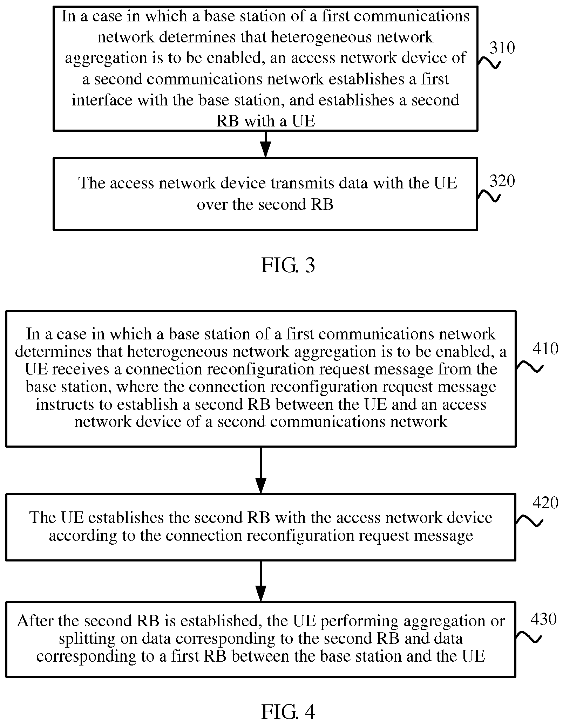

FIG. 3 is a schematic flowchart of a data transmission method according to an embodiment of the present invention. The method in FIG. 3 is executed by an access network device of a second communications network, for example, be executed by the eAN 120 in FIG. 1.

310. In a case in which a base station of a first communications network determines that heterogeneous network aggregation is to be enabled, the access network device of the second communications network establishes a first interface with the base station, and establishes a second RB with a UE.

320. The access network device transmits data with the UE over the second RB.

The access network device exchanges data corresponding to the second RB with the base station through the first interface, and the data that corresponds to the second RB and is exchanged by the access network device with the base station through the first interface is PDCP PDUs.

In the case in which the base station determines that heterogeneous network aggregation is to be enabled, the access network device establishes the second RB with the UE according to a notification from the base station. After the second RB is established, the base station may perform data transmission with the UE by using the access network device. For example, in a downlink direction, the base station may send data to the access network device through the first interface, and then the access network device may send the data to the UE over the second RB. In an uplink direction, the access network device may receive, over the second RB, data sent by the UE, and then send the data to the base station through the first interface.

In this embodiment of the present invention, in a case in which a base station of a first communications network determines that heterogeneous network aggregation is to be enabled, an access network device of a second communications network establishes a first interface with the base station, and establishes a second RB with the UE, so that after the second RB is established, the base station can perform data transmission with the UE over the second RB by using the access network device, and it can be implemented that the UE performs data transmission in two communications networks at the same time, and therefore, a utilization rate of network resources can be improved, and a data transmission rate and a peak rate of the UE can be improved.

Optionally, in an embodiment, the first communications network may be an LTE network, and the second communications network may be a non-LTE network.

For example, in the scenario shown in FIG. 1, the second communications network may be a CDMA2000 eHRPD network, the access network device may be the eAN 120, the first communications network is the LTE network, and the base station may be the eNB 110.

Optionally, in another embodiment, in step 310, the access network device may receive a negotiation message from the base station through a second interface, where the negotiation message may include data plane information, of the base station, on the first interface, and the negotiation message may further be used to instruct to establish the second RB. The access network device may generate an acknowledgment message according to the negotiation message, and establish the second RB with the UE, where the acknowledgment message may include data plane information, of the access network device, on the first interface. The access network device sends the acknowledgment message to the base station through the second interface.

Specifically, the second interface may be a signaling plane interface between the access network device and the base station, and the first interface may be a data plane interface between the access network device and the base station. The access network device and the base station exchange their respective data plane connection information on the first interface through the second interface, so as to establish the first interface between the access network device and the base station.

Optionally, in another embodiment, in step 320, the access network device may receive, over the second RB, a second part of encapsulated data packets sent by the UE, where the second part of encapsulated data packets may be obtained by performing encapsulation on data packets of a second IP flow by the UE. The access network device may perform decapsulation on the second part of encapsulated data packets to obtain a second part of PDCP PDUs. The access network device may send the second part of PDCP PDUs to the base station through the first interface.

Specifically, the UE may determine, according to a mapping relationship between the foregoing IP flow and the second RB, that the data packets of the second IP flow are to be transmitted over the second RB, and the UE may perform encapsulation processing on the data packets of the second IP flow to obtain the second part of encapsulated data packets. Therefore, the access network device may receive, over the second RB, the second part of encapsulated data packets sent by the UE, and then perform decapsulation processing to obtain the second part of PDCP PDUs, and send the second part of PDCP PDUs to the base station through the first interface.

Optionally, in another embodiment, the access network device may perform Radio Link Protocol (Radio Link Protocol, RLP) layer decapsulation processing or local IP layer decapsulation processing on the second part of encapsulated data packets to obtain the second part of PDCP PDUs.

For example, if the UE obtains the second part of encapsulated data packets after performing RLP layer encapsulation processing on the data packets of the second IP flow, that is, after performing encapsulation on the data packets of the second IP flow at an RLP layer, a stream (stream) layer, a PCP layer, a security (Security) layer, a MAC layer, and a PHY layer, the access network device may accordingly perform RLP layer decapsulation processing, so as to obtain the second part of PDCP PDUs.

If the UE obtains the second part of encapsulated data packets after performing local (Local) IP layer encapsulation processing on the data packets of the second IP flow, that is, after performing encapsulation on the data packets of the second IP flow at a local IP layer, a Point-to-Point Protocol (Point-to-Point Protocol) layer, the RLP layer, the stream (Stream) layer, a Packet Consolidation Protocol (Packet Consolidation Protocol, PCP) layer, a security (Security) layer, a MAC layer, and a PHY layer, the access network device may accordingly perform local IP layer decapsulation processing, so as to obtain the second part of PDCP PDUs.

Optionally, in another embodiment, the access network device may receive a third part of PDCP PDUs sent by the base station through the first interface, where the third part of the PDCP may be obtained by performing processing on data packets of a third IP flow by the base station. The access network device may perform encapsulation on the third part of PDCP PDUs to obtain a third part of encapsulated data packets, and send the third part of encapsulated data packets to the UE over the second RB.

For example, the base station determines, according to a mapping relationship between the foregoing IP flow and the second RB, that the third IP flow needs to be transmitted over the second RB, and after processing is performed on the data packets of the third IP flow to obtain the corresponding third part of PDCP PDUs, the third part of PDCP PDUs may be sent to the access network device through the first interface. After perform encapsulation processing on the third part of PDCP PDUs, and obtaining the corresponding third part of encapsulated data packets, the access network device may transmit the third part of encapsulated data packets to the UE over the second RB.

Optionally, in another embodiment, the access network device may perform RLP layer encapsulation processing or local IP layer encapsulation processing on the third part of PDCP PDUs to obtain the third part of encapsulated data packets.

Specifically, the access network device may perform RLP layer encapsulation processing on the third part of PDCP PDUs, that is, use the third part of PDCP PDUs as application layer data at the RLP layer and perform encapsulation at the RLP layer, the stream (stream) layer, the PCP layer, the security (Security) layer, the MAC layer, and the PHY layer to obtain the third part of encapsulated data packets.

The access network device may also perform local IP layer encapsulation processing on the third part of PDCP PDUs, that is, use the third part of PDCP PDUs as application layer data at the local IP layer and obtain the third part of encapsulated data packets after encapsulation at the local IP layer, the PPP layer, the RLP layer, the stream (stream) layer, the PCP layer, the security (Security) layer, the MAC layer, and the PHY layer.

Optionally, in another embodiment, the access network device may receive, over the second RB, a sixth part of encapsulated data packets sent by the UE, where the sixth part of encapsulated data packets are obtained by performing encapsulation processing on a sixth part of PDCP PDUs by the UE, and the sixth part of PDCP PDUs are some or all PDCP PDUs that need to be transmitted by the UE to the base station. The access network device may perform decapsulation processing on the sixth part of encapsulated data packets to obtain the sixth part of PDCP PDUs, and send the sixth part of PDCP PDUs to the base station through the first interface.

Specifically, the UE may perform splitting, according to information such as current air interface load of the base station and the access network device, on the PDCP PDUs that need to be transmitted to the base station, where the sixth part of PDCP PDUs obtained by the splitting may be transmitted over the second RB. The UE may perform encapsulation processing, for example, RLP layer encapsulation processing or local IP layer encapsulation processing on the sixth part of PDCP PDUs, so as to obtain the sixth part of encapsulated data packets. After receiving the sixth part of encapsulated data packets over the second RB, corresponding decapsulation processing may be performed, and after the sixth part of PDCP PDUs are obtained, the access network device sends the sixth part of PDCP PDUs to the base station through the first interface.

Optionally, in another embodiment, the access network device may perform RLP layer decapsulation processing or local IP layer decapsulation processing on the sixth part of encapsulated data packets to obtain the sixth part of PDCP PDUs.

Optionally, in another embodiment, the access network device may receive, through the first interface, a seventh part of PDCP PDUs sent by the base station, where the seventh part of PDCP PDUs are some or all PDCP PDUs that need to be transmitted by the base station to the UE. The access network device may perform encapsulation processing on the seventh part of PDCP PDUs to obtain a seventh part of encapsulated data packets, and send the seventh part of encapsulated data packets to the UE over the second RB.

Specifically, the base station may perform splitting, according to quintuple information, such as source IP addresses, destination IP addresses, source ports, destination port numbers, and upper-layer protocol numbers, of the PDCP PDUs, or according to information such as current load of the base station and the access network device, on the PDCP PDUs that need to be transmitted to the UE. If it is determined that the seventh part of PDCP PDUs are to be transmitted to the UE over the second RB, the seventh part of PDCP PDUs may be transmitted to the access network device through the first interface. The access network device may perform encapsulation processing on the seventh part of PDCP PDUs, and after obtaining the corresponding seventh part of encapsulated data packets, transmit the seventh part of encapsulated data packets to the UE over the second RB.

Optionally, in another embodiment, the access network device may perform RLP layer encapsulation processing or local IP layer encapsulation processing on the seventh part of PDCP PDUs to obtain the seventh part of encapsulated data packets.

FIG. 4 is a schematic flowchart of a data transmission method according to an embodiment of the present invention. The method in FIG. 4 is performed by a UE, for example, may be the UE 130 in FIG. 1.

410. In a case in which a base station of a first communications network determines that heterogeneous network aggregation is to be enabled, the UE receives a connection reconfiguration request message from the base station, where the connection reconfiguration request message instruct to establish a second RB with an access network device of a second communications network.

420. The UE establishes the second RB with the access network device according to the connection reconfiguration request message, so that the base station exchanges data corresponding to the second RB with the access network device.

430. After establishing the second RB, the UE perform aggregation or splitting on the data corresponding to the second RB and data corresponding to a first RB between the base station and the UE.

The base station exchanges the data corresponding to the second RB with the access network device, and the data that corresponds to the second RB and is exchanged by the base station with the access network device is PDCP PDUs.

In this embodiment of the present invention, in a case in which a base station of a first communications network determines that heterogeneous network aggregation is to be enabled, the base station establishes, with an access network device, a second RB between the access network device and a UE, so that the UE can perform aggregation or splitting on data corresponding to the second RB and data corresponding to a first RB between the base station and the UE, and it can be implemented that the UE performs data transmission in two communications networks, and therefore, a utilization rate of network resources can be improved, and a data transmission rate and a peak rate of the UE can be improved.

Optionally, in an embodiment, the first communications network may be an LTE network, and the second communications network may be a non-LTE network.

Optionally, in another embodiment, the connection reconfiguration request message may further carry a mapping relationship between an IP flow and the second RB.

Optionally, in another embodiment, in step 430, the UE may determine a first IP flow and a second IP flow that need to be transmitted to the base station, where the second IP flow corresponds to the second RB in the mapping relationship. The UE may perform encapsulation processing on data packets of the second IP flow to obtain a second part of encapsulated data packets, send the second part of encapsulated data packets to the access network device over the second RB, and send data packets of the first IP flow to the base station over the first RB.

The UE may determine, according to the mapping relationship, that the second IP flow corresponds to the second RB; therefore, the second IP flow needs to be transmitted over the second RB. After performing encapsulation on the data packets of the second IP flow, the UE may transmit the obtained second part of encapsulated data packets to the UE over the second RB. Meanwhile, the UE may send the data packets of the first IP flow to the base station over the first RB.

Optionally, in another embodiment, in step 430, the UE may perform RLP layer encapsulation processing or local IP layer encapsulation processing on the data packets of the second IP flow to obtain the second part of encapsulated data packets.

Specifically, the UE may obtain the second part of encapsulated data packets after performing RLP layer encapsulation processing on the data packets of the second IP flow, that is, after performing encapsulation on the data packets of the second IP flow at the RLP layer, a stream (stream) layer, a PCP layer, a security (Security) layer, a MAC layer, and a PHY layer.

The UE may also obtain the second part of encapsulated data packets after performing local IP layer encapsulation processing on the data packets of the second IP flow, that is, after performing encapsulation on the data packets of the second IP flow at a local IP layer, a PPP layer, the RLP layer, the stream (stream) layer, the PCP layer, the security (Security) layer, the MAC layer, and the PHY layer.

Optionally, in another embodiment, in step 430, the UE may receive, over the first RB, data packets that are of a fourth IP flow and are sent by the base station, and receive, over the second RB, a third part of encapsulated data packets sent by the access network device, where the third part of encapsulated data packets are obtained by performing encapsulation processing on, by the access network device, on a third part of PDCP PDUs corresponding to data packets of a third IP flow, and the third IP flow corresponds to the second RB in the mapping relationship. The UE may perform decapsulation processing on data of the fourth IP flow to obtain a fourth part of PDCP PDUs, and perform decapsulation processing on the third part of encapsulated data packets to obtain the third part of PDCP PDUs. The UE performs aggregation on the third part of PDCP PDUs and the fourth part of PDCP PDUs.

Optionally, in another embodiment, in step 430, the UE may perform RLP layer decapsulation processing on the third part of encapsulated data packets to obtain the third part of PDCP PDUs, or the UE performs local IP layer decapsulation processing on the third part of encapsulated data packets to obtain the third part of PDCP PDUs.

Optionally, in another embodiment, in step 430, the UE may divide PDCP PDUs that need to be transmitted to the base station into a fifth part of PDCP PDUs and a sixth part of PDCP PDUs. The UE performs encapsulation processing on the sixth part of PDCP PDUs to obtain a sixth part of encapsulated data packets, and obtains a fifth part of encapsulated data packets after performing processing on the fifth part of PDCP PDUs. The UE may send the sixth part of encapsulated data packets to the access network device over the second RB, and send the fifth part of encapsulated data packets to the base station over the first RB.

For example, the UE may divide the PDCP PDUs that need to be transmitted to the base station into two parts, that is, the fifth part of PDCP PDUs and the sixth part of PDCP PDUs, according to quintuple information, such as source IP addresses, destination IP addresses, source ports, destination port numbers, and upper-layer protocol numbers, of the PDCP PDUs, or according to information such as current load of the base station and the access network device, or further according to a QoS requirement of an IP flow to which the PDCP PDUs that need to be transmitted to the base station belongs and a QoS parameter of the second RB.

Because an IP flow has a QoS requirement, after determining that the QoS parameter of the second RB can meet a QoS requirement of an IP flow to which the sixth part of PDCP PDUs belongs, the UE may determine that the sixth part of PDCP PDUs shall be transmitted to the base station over the second RB, so that it can be ensured that the sixth part of PDCP PDUs are normally transmitted over the second RB.

The UE may perform encapsulation processing on the sixth part of PDCP PDUs to obtain the sixth part of encapsulated data packets, and send the sixth part of encapsulated data packets to the access network device over the second RB.

Meanwhile, the UE may determine that the fifth part of PDCP PDUs are to be transmitted to the base station over the first RB. The UE may perform encapsulation processing on the fifth part of PDCP PDUs to obtain the fifth part of encapsulated data packets, for example, the UE may obtain the fifth part of encapsulated data packets after performing encapsulation processing according to a protocol standard of an LTE network in the prior art, that is, after encapsulation processing at the RLC layer, the MAC layer, and the PHY layer is performed, and transmit the fifth part of encapsulated data packets to the base station over the first RB.

In addition, the UE may add SN information to a PDCP PDU, so that the UE can sort received PDCP PDUs.

Optionally, in another embodiment, the UE may perform RLP layer encapsulation processing or local IP layer encapsulation processing on the sixth part of PDCP PDUs to obtain the sixth part of encapsulated data packets.

Optionally, in another embodiment, in step 430, the UE may receive, over the first RB, an eighth part of encapsulated data packets sent by the base station, and receive, over the second RB, a seventh part of encapsulated data packets sent by the access network device. The UE may perform decapsulation processing on the eighth part of encapsulated data packets to obtain an eighth part of PDCP PDUs, and perform decapsulation processing on the seventh part of encapsulated data packets to obtain a seventh part of PDCP PDUs. The UE may perform aggregation on the seventh part of PDCP PDUs and the eighth part of PDCP PDUs.

For example, the UE may send the two parts of PDCP PDUs to an upper layer after sorting the two parts of PDCP PDUs according to SN information of the seventh part of PDCP PDUs and SN information of the eighth part of the PDCP.

Optionally, in another embodiment, the UE may perform RLP layer decapsulation processing or local IP layer decapsulation processing on the seventh part of encapsulated data packets to obtain the seventh part of PDCP PDUs.

The following describes this embodiment of the present invention in detail with reference to a specific example. It should be noted that, the example is merely intended to help a person skilled in the art better understand this embodiment of the present invention, instead of limiting the scope of this embodiment of the present invention.

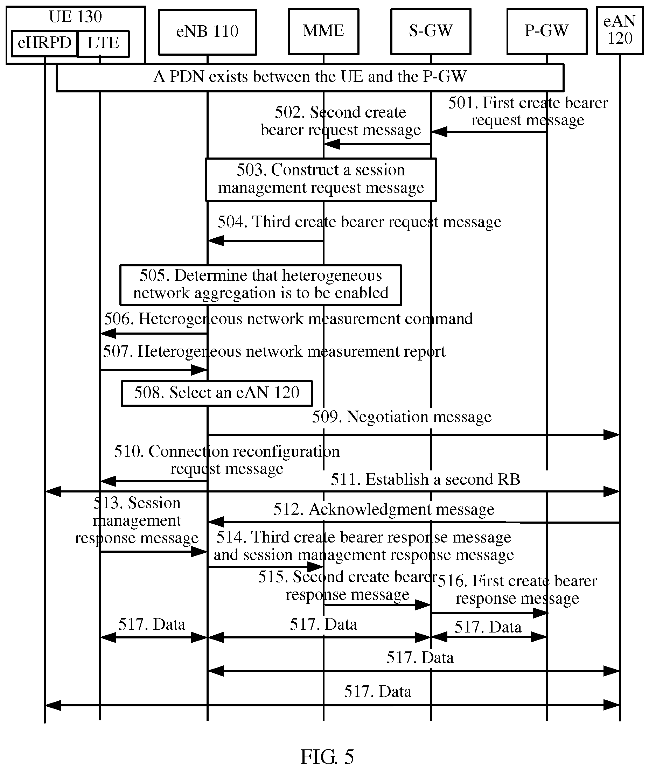

FIG. 5 is a schematic flowchart of a process of a data transmission method according to an embodiment of the present invention. FIG. 5 is described with reference to the scenario in FIG. 1. It is assumed that a first communications network is an LTE network, a second communications network is a CDMA2000 eHRPD network, a base station is the eNB 110, an access network device is the eAN 120, and a UE is the UE 130 in FIG. 1.

In FIG. 5, the UE 130 is in the LTE network, and has established a packet data network (Packet Data Network, PDN) connection with a packet data network gateway (Packet Data Network Gateway, P-GW). A first RB may have been in existence between the UE 130 and the eNB 110. A data flow path may be UE 130 - eNB 110 - S-GW - P-GW. It may be assumed herein that the GTP (GPRS (General Packet Radio Service, general packet radio service) Tunneling Protocol, GPRS tunneling protocol) protocol is used between the S-GW and the P-GW.

501. The P-GW sends a first create bearer request (Create Bearer Request) message to the S-GW, where the first create bearer request message may include an international mobile subscriber identity (International Mobile Subscriber Identification Number, IMSI), evolved packet system (Evolved Packet System, EPS) bearer QoS information, and a traffic flow template (Traffic Flow Template, TFT).

The EPS bearer QoS information may include an EPS bearer QoS parameter.

502. The S-GW sends a second create bearer request message to a mobility management entity (Mobility Management Entity, MME), where the second create bearer request message may include an IMSI, EPS bearer QoS information, a TFT, and an S1-TEID (Tunnel Endpoint Identifier, tunnel endpoint identifier).

503. The MME allocates an EPS bearer identifier (Identifier) to the UE 130, and constructs a session management request (Session Management Request) message.

The session management request message may include an EPS bearer ID, EPS bearer QoS information, and a TFT.

504. The MME sends a third create bearer request message to the eNB 110.

The third create bearer request message may include the session management request message and an S1-TEID.

For a detailed process from step 501 to step 504, reference may be made to a process of creating a dedicated bearer in an existing LTE network.

505. The eNB 110 determines that heterogeneous network aggregation is to be enabled.

For example, the eNB 110 may determine, according to the third create bearer request message, capability information of the UE 130 or other information such as signal strength that is of the eNB 110 and reported by the UE 130, information about a current location of the UE 130, a current load degree of the eNB 110, and load information of the CDMA2000 eHRPD network, that heterogeneous network aggregation needs to be enabled.

In addition, the eNB 110 may further generate an RB QoS parameter in this process according to the EPS bearer QoS parameter carried in the third create bearer request message in step 504.

In addition, the eNB 110 may further determine a mapping relationship between an IP flow and a second RB after determining that heterogeneous network aggregation is to be enabled. The mapping relationship may indicate which IP flow may be transmitted over the second RB. For example, the eNB 110 may parse the session management request message, and determine the mapping relationship according to the EPS bearer QoS parameter and the TFT.

506. The eNB 110 sends a heterogeneous network measurement command to the UE 130, where the heterogeneous network measurement command instructs the UE 130 to measure the CDMA2000 eHRPD network in which the UE 130 is located.

507. The UE 130 reports a heterogeneous network measurement report to the eNB 110 according to the heterogeneous network measurement command.

The UE 130 may measure the CDMA2000 eHRPD network according to the heterogeneous network measurement command, and generate the heterogeneous network measurement report.

The heterogeneous network measurement report may include information about signal strength of the CSMA2000 eHRPD network, and may also include other related information, such as load information, of the CSMA2000 eHRPD network.

508. The eNB 110 selects, according to the heterogeneous network measurement report, the eAN 120 and a target cell of the eAN 120 that participate in heterogeneous network aggregation.

For example, the eNB 110 may select, according to the signal strength information of the CDMA2000 eHRPD network, a cell that is of the eAN 120 and has a strongest signal as the target cell that participates in heterogeneous network aggregation.

In addition, the eNB 110 may also instruct the UE 130 not to perform heterogeneous system measurement, and may select the target cell of the eAN 120 according to preconfiguration, load of a cell of the eNB 110, or information about a current location of the UE 130.

509. The eNB 110 sends a negotiation message to the eAN 120 through a second interface.

The negotiation message may carry data plane information, of the eNB 110, on a first interface, where the data plane information is used to establish the first interface with the eAN 120. The negotiation message further instructs the eAN 120 to establish the second RB with the UE 130. The negotiation message may further carry information about the target cell of the eAN 120, for example, the information about the target cell of the eAN 120 may include carrier information and pilot number (Pilot Number, PN) information of a pilot (pilot).

The second interface may be a signaling plane interface between the eNB 110 and the eAN 120. The first interface may be a data plane interface between the eNB 110 and the eAN 120. The data plane information, of the eNB110, on the first interface may include: a UDP port number of the eNB110, an IP address of the first interface of the eNB 110, and a GRE key (eNB→eAN).

In addition, the negotiation message may further carry an IMSI and an RB QoS parameter.

In addition, the first interface may be named an XX-3 interface, and the second interface may be named an XX-1 interface.

510. The eNB 110 sends a connection reconfiguration request message to the UE 130.

The connection reconfiguration request message may instruct to establish the second RB between the UE 130 and the eAN 120.

The connection reconfiguration request message may be an improvement of a radio resource control (Radio Resource Control, RRC) connection reconfiguration request (Connection Reconfiguration Request) message in the prior art, for example, a new information element (Information Element, IE) is added, and may also be totally different from the existing RRC connection reconfiguration request message.

The connection reconfiguration request message may carry the mapping relationship between an IP flow and the second RB. The mapping relationship may be used to indicate which IP flow shall be transmitted over the second RB.

The connection reconfiguration request message may further include content, such as the EPS bearer ID, the EPS bearer QoS information, and the TFT, of the session management request message. The connection reconfiguration request message may further include an RB QoS parameter and information about the target cell of the eAN 120. For example, the information about the target cell of the eAN 120 may include carrier information and pilot (pilot) PN information.

511. Establish a second RB between the eAN 120 and the UE 130.

This process may comply with a Local Internet Protocol Access (Local Internet Protocol Access, LIPA) process of 3GPP2 A.S0024-0 v1.0. For example, the UE 130 may trigger an RLP connection process with the eAN 120. The UE 130 may map the RB QoS parameter carried in the connection reconfiguration request message to an eHRPD QoS parameter, and then may establish the RLP connection with the eAN 120 according to the eHRPD QoS parameter and the information about the target cell of the eAN 120, and establish the second RB.

The eAN 120 may allocate a local IP address to the UE 130 by means of AN-AAA. In addition, the UE 130 may further store the mapping relationship between an IP flow and the second RB.

512. The eAN 120 sends an acknowledgment message to the eNB 110.

The acknowledgment message may carry data plane information, of the eAN 120, on the first interface, for example, the data plane information may include: a UDP port number (Port Number) of the eAN 120, an IP address of the first interface of the eAN 120, and a GRE key (eAN→eNB). The GRE key may be used to distinguish different IP flows (flow).

The first interface may use a mechanism that is the same as that of an HRPD system A10 interface, so as to support multiple data plane connections, and different data plane connections may be distinguished by using the GRE key.

In addition, the acknowledgment message may further notify the eNB 110 that the second RB has been established.

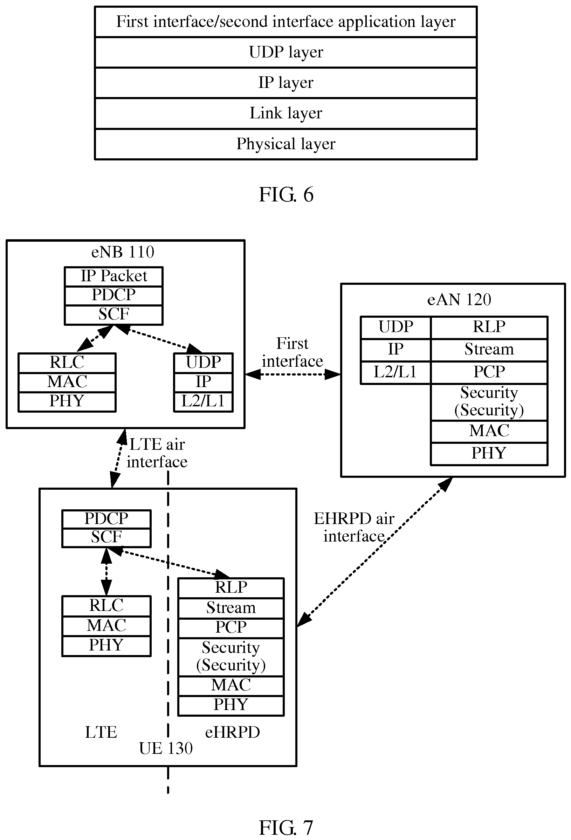

FIG. 6 is a schematic diagram of a protocol stack of a first interface and a second interface according to an embodiment of the present invention. As shown in FIG. 6, the protocol stack of the first interface or the second interface may include an application (Application) layer, a UDP layer, an IP layer, a link (Link) layer, and a physical layer.

513. The UE 130 sends a session management response message to the eNB 110.

514. The eNB 110 sends a third create bearer response message and the session management response message to the MME.

515. The MME sends a second create bearer response message to the S-GW.

516. The S-GW sends a first create bearer response message to the P-GW.

517. The UE 130 and the eNB 110 transmit data over a first RB. The eNB 110 exchanges data corresponding to the second RB with the eAN 120 through the first interface, and the UE 130 and the eAN 120 transmit data over the second RB.

It should be understood that ordinal numbers of the foregoing processes do not mean execution order. The execution order of the processes should be determined according to functions and internal logic of the processes, and should not be construed as any limitation on the implementation processes of the embodiments of the present invention. For example, the foregoing step 509 and step 510 does not have any specific order. Step 510 may be performed first and then step 509 is performed, or they may be performed concurrently.

The following describes the data transmission process in step 517 in detail with reference to an example. It should be noted that, the example is merely intended to help a person skilled in the art better understand this embodiment of the present invention, instead of limiting the scope of this embodiment of the present invention.

In a downlink direction, the P-GW may send, to the S-GW, data packets that need to be transmitted to the UE 130. The S-GW may forward the data to the eNB 110. The eNB 110 is responsible for performing splitting on the data, and for a data splitting process, the splitting may be performed based on IP flow, or the splitting may be performed based on IP data packet. An IP data packet is a PDCP PDU. In an uplink direction, the UE 130 is responsible for performing splitting on data; the splitting may be performed based on IP flow, or the splitting may be performed based on IP data packet. The following describes two data transmission processes at different splitting granularities in detail.

### (1) A data transmission process based on IP flow.

### Downlink direction:

It is assumed that the eNB 110 has two IP flows that need to be transmitted to the UE 130. The two IP flows are IP flow 1 and IP flow 2 respectively. According to the mapping relationship between an IP flow and the second RB, it is determined that IP flow 2 shall be transmitted over the second RB.

The eNB 110 may perform processing on data packets of IP flow 2 at a PDCP layer to obtain PDCP PDUs corresponding to IP flow 2. The eNB sends the PDCP PDUs of IP flow 2 to the eAN 120 through the first interface; and meanwhile, the eNB may send data packets of IP flow 1 to the UE 130 over the first RB.

After performing encapsulation processing on the PDCP PDUs of IP flow 2, the eAN 120 sends, to the UE 130 over the second RB, encapsulated data packets corresponding to IP flow 2.

The UE 130 performs decapsulation processing on the data packets of IP flow 1 to obtain PDCP PDUs corresponding to IP flow 1, performs decapsulation processing on the encapsulated data packets corresponding to IP flow 2 to obtain the PDCP PDUs corresponding to IP flow 2, and performs aggregation processing on PDCP PDUs corresponding to the two IP flows at the PDCP layer.

### Uplink direction:

A process in the uplink direction is similar to that in the downlink direction.

It is assumed that the UE 130 has two IP flows that need to be transmitted to the eNB 110, where the two IP flows are IP flow 3 and IP flow 4 respectively. The UE 130 may determine, according to the mapping relationship between an IP flow and the second RB carried in the foregoing connection reconfiguration request message, that IP flow 3 is to be transmitted over the second RB.

The UE 130 may perform encapsulation processing on data packets of IP flow 3, and send encapsulated data packets corresponding to IP flow 3 to the eAN 120 over the second RB. Meanwhile, the UE 130 may send data packets of IP flow 4 to the eNB 110 over the first RB.

The eAN 120 may perform decapsulation processing on the encapsulated data packets corresponding to IP flow 3 to obtain PDCP PDUs corresponding to IP flow 3, and send the PDCP PDUs corresponding to IP flow 3 to the eNB 110 through the first interface.

The eNB 110 may perform decapsulation on the data packets of IP flow 4 to obtain PDCP PDUs corresponding to IP flow 4, and perform aggregation processing on the PDCP PDUs corresponding to IP flow 3 and the PDCP PDUs corresponding to IP flow 4 at the PDCP layer. After processing, the aggregated data is sent to the S-GW, and is forwarded to the P-GW by the S-GW.

FIG. 7 is a schematic diagram of an example of a data transmission protocol stack according to an embodiment of the present invention. The foregoing data transmission process may be based on the protocol stack shown in FIG. 7. An SCF layer is a newly added function of the eNB 110 or the UE 130 in this embodiment of the present invention. At the SCF layer, splitting may be performed on PDCP PDUs, or at the SCF layer, PDCP PDUs may be aggregated and transmitted to the PDCP layer. In FIG. 7, the UE 130 and the eAN 120 may perform RLP layer encapsulation/decapsulation processing.

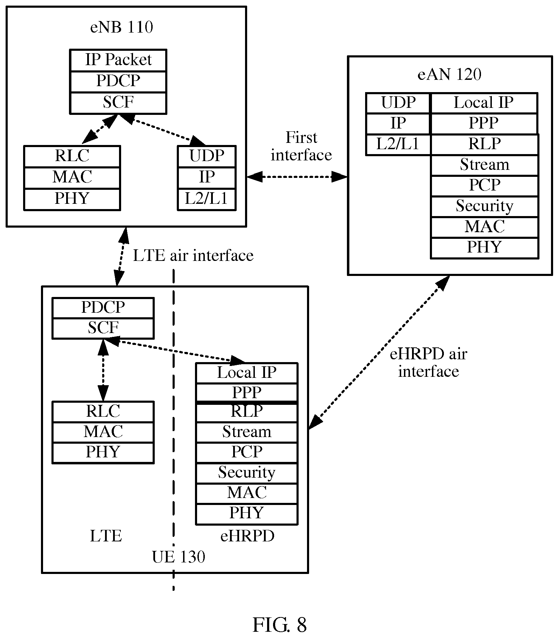

FIG. 8 is a schematic diagram of another example of a data transmission protocol stack according to an embodiment of the present invention. The foregoing data transmission process may also be based on the protocol stack shown in FIG. 8. In FIG. 8, the UE 130 and the eAN 120 may perform local IP layer encapsulation/decapsulation processing, that is, IP in local IP encapsulation/decapsulation processing.

### (2) A splitting process based on IP data packet.

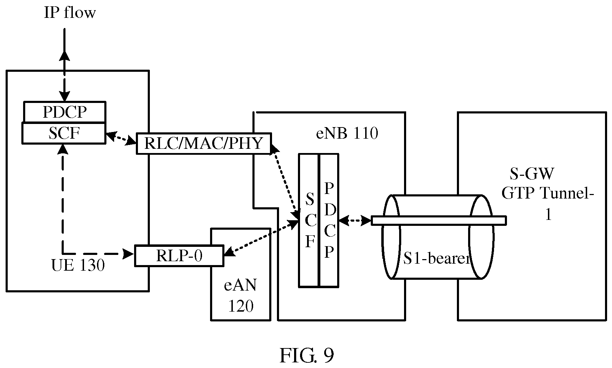

FIG. 9 is a schematic diagram of an example of a data transmission process according to an embodiment of the present invention. The following is described with reference to FIG. 9. The data transmission process in the example in FIG. 9 may also be based on the protocol stack shown in FIG. 7 or FIG. 8. It should be noted that, if splitting is performed based on IP data packet, the eNB 110 does not need to determine the mapping relationship between an IP flow and the second RB, and does not need to add the mapping relationship between an IP flow and the second RB to the foregoing connection reconfiguration request message.

### Downlink direction:

As shown in FIG. 9, it is assumed that the eNB 110 has one IP flow that needs to be transmitted to the UE 130. The eNB 110 may convert data packets of the IP flow into PDCP PDUs. At the SCF layer of the eNB 110, the PDCP PDUs corresponding to the IP flow may be divided into two parts according to quintuple information, such as source IP addresses, destination IP addresses, source ports, destination port numbers, and upper-layer protocol numbers, of the PDCP PDUs, or according to information such as current load of the eNB 110 and the eAN 120, where one part of PDCP PDUs are transmitted to the eAN 120 through the first interface, and after RLC/MAC/PHY encapsulation is performed on the other part of PDCP PDUs, encapsulated data packets are transmitted to the eNB110 over the first RB.

The eAN 120 may perform encapsulation, based on the protocol stack in FIG. 7 or FIG. 8, on the part of PDCP PDUs that are transmitted by the eNB 110 through the first interface and transmit encapsulated data packets to the UE 130 over the second RB. For example, the eAN 120 may perform RLP/Stream/PCP/Security/MAC/PHY encapsulation processing on this part of PDCP PDUs based on the protocol stack shown in FIG. 7, and may perform local IP/PPP/RLP/Stream/PCP/Security/MAC/PHY encapsulation processing on this part of PDCP PDUs based on the protocol stack shown in FIG. 8.

### Uplink direction:

It is assumed that the UE 130 has one IP flow that needs to be transmitted to the eNB 110. The UE 130 may convert data packets of the IP flow into corresponding PDCP PDUs. At the SCF layer of the UE 130, the PDCP PDUs corresponding to the IP flow may be divided into two parts according to quintuple information, such as source IP addresses, destination IP addresses, source ports, destination port numbers, and upper-layer protocol numbers, of the PDCP PDUs, or according to information such as current load of the eNB 110 and the eAN 120, where after encapsulation is performed on one part of PDCP PDUs, encapsulated PDCU PDUs are transmitted to the eAN 120 over the second RB, for example, after encapsulation processing is performed on the part of PDCP PDUs based on the protocol stack shown in FIG. 7 or FIG. 8, for example, after RLP/Stream/PCP/Security/MAC/PHY encapsulation processing is performed based on the protocol stack shown in FIG. 7, or after local IP/PPP/RLP/Stream/PCP/Security/MAC/PHY encapsulation processing is performed based on the protocol stack shown in FIG. 8, encapsulated data packets may be transmitted to the eAN 120 over the second RB. Meanwhile, the UE 130 may perform RLC/MAC/PHY encapsulation on the other part of PDCP PDUs and transmit encapsulated data packets to the eNB 110 over the first RB.

The eAN 120 may perform decapsulation processing, based on the protocol stack in FIG. 7 and FIG. 8, on the encapsulated data packets transmitted by the UE 130 over the second RB to obtain PDCP PDUs, and transmit this part of PDCP PDUs to the eNB 110 through the first interface.

The eNB 110 may perform decapsulation processing on the encapsulated data packets received over the first RB to obtain corresponding PDCP PDUs, and perform aggregation processing, at the PDCP layer, on this part of PDCP PDUs and another part of PDCP PDUs transmitted by the eAN 120 through the first interface. For example, rearrangement and aggregation may be performed based on serial number, then the aggregated data is transmitted to the S-GW, and the S-GW forwards the data to the P-GW.

In this embodiment of the present invention, in a case of determining that heterogeneous network aggregation is to be enabled, an eNB establishes a first interface with an eAN, and a second RB is established between the eAN and a UE, so that the UE can perform data transmission in two different networks, and therefore, a utilization rate of network resources can be improved, and a data transmission rate and a peak rate of the UE can be improved.

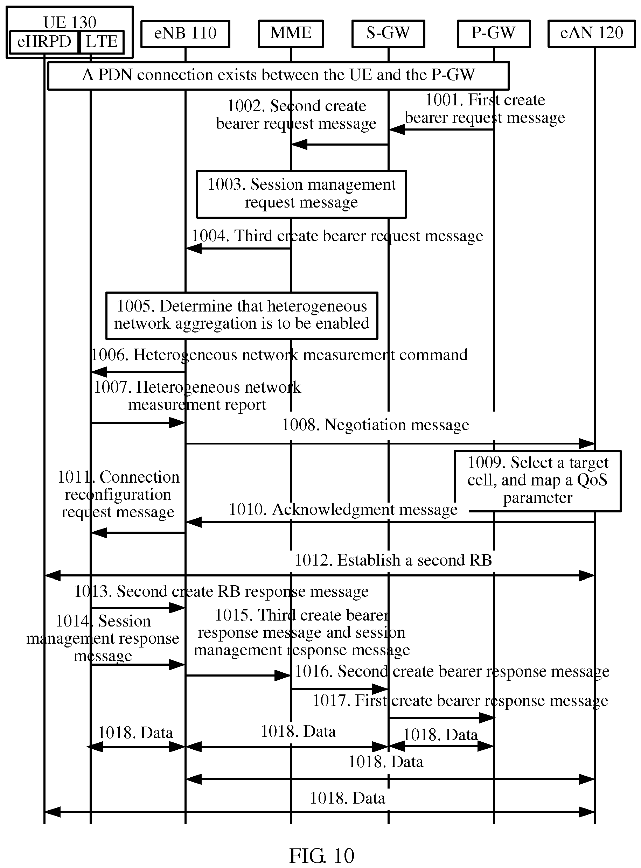

FIG. 10 is a schematic flowchart of a process of a data transmission method according to another embodiment of the present invention.

In FIG. 10, a UE 130 is in an LTE network, and has established a PDN connection with a packet data network gateway (Packet Data Network Gateway, P-GW). A first RB may have been in existence between the UE 130 and an eNB 110. A data flow path may be UE 130 - eNB 110 - S-GW - P-GW. It may be assumed herein that the GTP protocol is used between the S-GW and the P-GW.

Step 1001 to step 1007 in FIG. 10 are similar to step 501 to step 507 in FIG. 5, and to avoid repetition, details are not described herein again.

1008. The eNB 110 sends a negotiation message to an eAN 120.

The negotiation message may carry data plane information, of the eNB 110, on a first interface, where the data plane information is used to establish the first interface with the eAN 120. The negotiation message further instructs the eAN 120 to establish the second RB with the UE 130. The negotiation message may further carry information about a target cell of the eAN 120, for example, the information about the target cell of the eAN 120 may include carrier information and pilot (pilot) PN information.

The second interface may be a signaling plane interface between the eNB 110 and the eAN 120. The first interface may be a data plane interface between the eNB 110 and the eAN 120. The data plane information, of the eNB110, on the first interface may include: a UDP port number of the eNB110, an IP address of the first interface of the eNB 110, and a GRE key (eNB→eAN).

The negotiation message may further include cell information of the eAN 120, where the cell information may be provided by a heterogeneous network measurement report in step 507, and may also be generated by the eNB 110 according to the heterogeneous network measurement report. The cell information may include an ID and signal strength of the cell of the eAN 120.

In addition, the negotiation message may further carry an IMSI and an RB QoS parameter.

1009. The eAN 120 determine, according to cell information that is of the eAN 120 and carried in the negotiation message, a target cell that participates in heterogeneous network aggregation.

In addition, the eAN 120 may further select, according to cell load of the eAN 120 itself or information about a current location of the UE 130, the target cell that participates in heterogeneous network aggregation.

Meanwhile, the eAN may further generate an eHRPD QoS parameter by mapping according to the RB QoS parameter.

1010. The eAN 120 sends an acknowledgment message to the eNB 110.

The acknowledgment message may carry data plane information, of the eAN 120, on the first interface, for example, the data plane information may include: a UDP port number (Port Number) of the eAN 120, an IP address of the first interface of the eAN 120, and a GRE key (eAN→eNB). The GRE key may be used to distinguish different IP flows (flow).

The eNB 110 and the eAN 120 exchange their respective data plane information on the first interface, so as to establish the first interface between the eNB 110 and the eAN 120.

The acknowledgment message may further carry the information about the target cell of the eAN 120 and the eHRPD QoS parameter.

1011. The eNB 110 sends a connection reconfiguration request message to the UE 130.

The connection reconfiguration request message may instruct to establish the second RB between the UE 130 and the eAN 120.

The connection reconfiguration request message may be an improvement of a radio resource control (Radio Resource Control, RRC) connection reconfiguration request (Connection Reconfiguration Request) message in the prior art, for example, a new information element (Information Element, IE) is added, and may also be totally different from the existing RRC connection reconfiguration request message.

The connection reconfiguration request message may carry the mapping relationship between an IP flow and the second RB. The mapping relationship may be used to indicate which IP flow shall be transmitted over the second RB.

The connection reconfiguration request message may further carry the information about the target cell of the eAN 120 and the eHRPD QoS parameter. For example, the information about the target cell of the eAN 120 may include carrier information and pilot (pilot) PN information.

In addition, the connection reconfiguration request message may further include content, such as an EPS bearer ID, EPS bearer QoS information, and a TFT, of the session management request message.

1012. Establish a second RB between the eAN 120 and the UE 130.

Step 1012 is similar to step 511, and to avoid repetition, details are not described herein again.

1013. The UE 130 sends a second create RB response message to the eNB 110.

The UE 130 may notify, by using the second create RB response message, the eNB 110 that the second RB has been established.

Step 1014 to step 1018 are similar to step 513 to step 517 in FIG. 5, and to avoid repetition, details are not described herein again.

In this embodiment of the present invention, in a case of determining that heterogeneous network aggregation is to be enabled, an eNB establishes a first interface with an eAN, and a second RB is established between the eAN and a UE, so that the UE can perform data transmission in two different networks, and therefore, a utilization rate of network resources can be improved, and a data transmission rate and a peak rate of the UE can be improved.

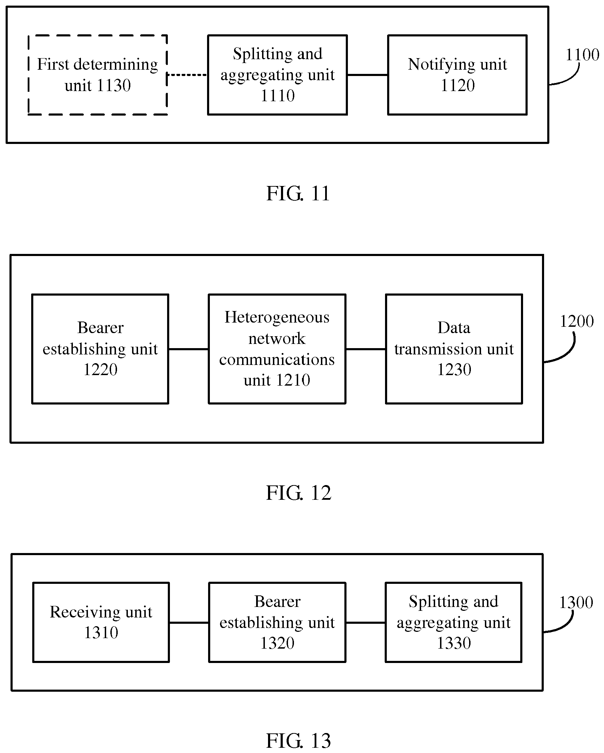

FIG. 11 is a schematic block diagram of a base station according to an embodiment of the present invention. An example of a base station 1100 in FIG. 11 is an eNB 110 in FIG. 1. The base station 1100 belongs to a first communications network. The base station 1100 includes a splitting and aggregating unit 1110 and a notifying unit 1120.

The splitting and aggregating unit 1110 establishes a first interface with an access network device of a second communications network in a case of determining that heterogeneous network aggregation is to be enabled. After the splitting and aggregating unit 1110 establishes the first interface with the access network device of the second communications network, the notifying unit 1120 notifies the access network device to establish a second RB between the access network device and a UE, and notify the UE to establish the second RB. The splitting and aggregating unit 1110 further exchanges data corresponding to the second RB with the access network device through a first interface after the second RB is established, and performs aggregation or splitting on the data corresponding to the second RB and data corresponding to a first RB between the base station and the UE.

The data that corresponds to the second RB and is exchanged by the splitting and aggregating unit 1110 with the access network device through the first interface is PDCP PDUs.

In this embodiment of the present invention, in a case of determining that heterogeneous network aggregation is to be enabled, a base station of a first communications network establishes a first interface with an access network device of a second communications network, and notifies the access network device and a UE to establish a second RB between the access network device and the UE, so that the base station can perform aggregation or splitting on data corresponding to the second RB and data corresponding to a first RB between the base station and the UE, and it can be implemented that the UE performs data transmission in two communications networks at the same time, and therefore, a utilization rate of network resources can be improved, and a data transmission rate and a peak rate of the UE can be improved.

For other functions and operations of the base station 1100, reference may be made to the processes related to a base station in the foregoing method embodiments from FIG. 2 to FIG. 10, and to avoid repetition, details are not described herein again.

Optionally, in another embodiment, the first communications network may be an LTE network, and the second communications network may be a non-LTE network.

Optionally, in another embodiment, the notifying unit 1120 may send a negotiation message to the access network device through a second interface, where the negotiation message includes data plane information, of the base station, on the first interface, and the negotiation message is further used to instruct to establish the second RB. The notifying unit 1120 may further send a connection reconfiguration request message to the UE, where the connection reconfiguration request message is used to instruct to establish the second RB. The notifying unit 1120 may further receive, through the second interface, an acknowledgment message generated by the access network device according to the negotiation message, where the acknowledgment message includes data plane information, of the access network device, on the first interface.

Optionally, in another embodiment, the base station 1110 may further include a first determining unit 1130.

The first determining unit 1130 may determine a mapping relationship between an IP flow and the second RB. The notifying unit 1120 may further add the mapping relationship to the connection reconfiguration request message.

Optionally, in another embodiment, the splitting and aggregating unit 1110 may receive, over the first RB, data packets that are of a first Internet Protocol IP flow and are sent by the UE, and receive a second part of PDCP PDUs from the access network device through the first interface, where the second part of PDCP PDUs are obtained by performing decapsulation processing, by the access network device, on a second part of encapsulated data packets sent by the UE over the second RB, where the second part of encapsulated data packets are obtained by performing encapsulation processing on data packets of a second IP flow by the UE, and the second IP flow corresponds to the second RB in the mapping relationship; perform processing on the data packets of the first IP flow to obtain a first part of PDCP PDUs; and perform aggregation on the first part of PDCP PDUs and the second part of PDCP PDUs.

Optionally, in another embodiment, the splitting and aggregating unit 1110 may acquire a third IP flow and a fourth IP flow that need to be transmitted to the UE, where the third IP flow corresponds to the second RB in the mapping relationship; perform processing on data packets of the third IP flow to obtain a third part of PDCP PDUs; and send the third part of PDCP PDUs to the access network device through the first interface, and send data packets of the fourth IP flow to the UE over the first RB.

Optionally, in another embodiment, the splitting and aggregating unit 1110 may receive, over the first RB, a fifth part of encapsulated data packets sent by the UE, and receive a sixth part of PDCP PDUs from the access network device through the first interface, where the sixth part of PDCP PDUs are obtained by performing processing, by the access network device, on a sixth part of encapsulated data packets sent by the UE over the second RB; process the fifth part of encapsulated data packets to obtain a fifth part of PDCP PDUs; and aggregate the fifth part of PDCP PDUs and the sixth part of PDCP PDUs.

Optionally, in another embodiment, the splitting and aggregating unit 1110 may divide PDCP PDUs that need to be transmitted to the UE into a seventh part of PDCP PDUs and an eighth part of PDCP PDUs; send the seventh part of PDCP PDUs to the access network device through the first interface; obtain an eighth part of encapsulated data packets after performing encapsulation processing on the eighth part of PDCP PDUs; and send the eighth part of encapsulated data packets to the UE over the first RB.

FIG. 12 is a schematic block diagram of an access network device according to an embodiment of the present invention. An example of an access network device 1200 in FIG. 12 is an eAN 120 in FIG. 1. The access network device 1200 belongs to a second communications network. The access network device 1200 includes a heterogeneous network communications unit 1210, a bearer establishing unit 1220, and a data transmission unit 1230.

The heterogeneous network communications unit 1210 establishes a first interface with a base station of a first communications network in a case in which the base station determines that heterogeneous network aggregation is to be enabled. The bearer establishing unit 1220 establishes a second RB with a UE. The data transmission unit 1230 transmits data with the UE over the second RB.

The heterogeneous network communications unit 1210 exchanges data corresponding to the second RB with the base station through the first interface, and the data that corresponds to the second RB and is exchanged with the base station through the first interface is PDCP PDUs.

In this embodiment of the present invention, in a case in which a base station of a first communications network determines that heterogeneous network aggregation is to be enabled, an access network device of a second communications network establishes a first interface with the base station, and establishes a second RB with the UE, so that after the second RB is established, the base station can perform data transmission with the UE over the second RB by using the access network device, and it can be implemented that the UE performs data transmission in two communications networks at the same time, and therefore, a utilization rate of network resources can be improved, and a data transmission rate and a peak rate of the UE can be improved.

For other functions and operations of the access network device 1200, reference may be made to the processes related to an access network device in the foregoing method embodiments from FIG. 2 to FIG. 10, and to avoid repetition, details are not described herein again.

Optionally, in an embodiment, the first communications network may be an LTE network, and the second communications network may be a non-LTE network.

Optionally, in another embodiment, the heterogeneous network communications unit 1210 may receive a negotiation message from the base station through a second interface, generate an acknowledgement message according to the negotiation message, and send the acknowledgement message to the base station through the second interface, where the negotiation message includes data plane information, of the base station, on the first interface, the negotiation message is further used to instruct to establish the second RB, and the acknowledgement message includes data plane information, of the access network device, on the first interface 1200.

The bearer establishing unit 1220 may establish the second RB with the UE according to the negotiation message.

Optionally, in another embodiment, the data transmission unit 1230 may receive, over the second RB, a second part of encapsulated data packets sent by the UE, where the second part of encapsulated data packets are obtained by performing encapsulation processing on data packets of a second IP flow by the UE.

The heterogeneous network communications unit 1210 may perform decapsulation processing on the second part of encapsulated data packets to obtain a second part of PDCP PDUs, and send the second part of PDCP PDUs to the base station through the first interface.

Optionally, in another embodiment, the heterogeneous network communications unit 1210 may perform RLP layer decapsulation processing or local IP layer decapsulation processing on the second part of encapsulated data packets to obtain the second part of PDCP PDUs.

Optionally, in another embodiment, the heterogeneous network communications unit 1210 may receive a third part of PDCP PDUs sent by the base station through the first interface, where the third part of PDCP are obtained by performing processing on data packets of a third IP flow by the base station.

The data transmission unit 1230 may perform encapsulation processing on the third part of PDCP PDUs to obtain a third part of encapsulated data packets, and send the third part of encapsulated data packets to the UE over the second RB.

Optionally, in another embodiment, the data transmission unit 1230 may perform RLP layer encapsulation processing or local IP layer encapsulation processing on the third part of PDCP PDUs to obtain the third part of encapsulated data packets.

Optionally, in another embodiment, the data transmission unit 1230 may receive, over the second RB, a sixth part of encapsulated data packets sent by the UE, where the sixth part of encapsulated data packets are obtained by performing encapsulation processing on a sixth part of PDCP PDUs by the UE, and the sixth part of PDCP PDUs are some or all PDCP PDUs that need to be transmitted by the UE to the base station.

The heterogeneous network communications unit 1210 may perform decapsulation processing on the sixth part of encapsulated data packets to obtain the sixth part of PDCP PDUs, and send the sixth part of PDCP PDUs to the base station through the first interface.

Optionally, in another embodiment, the heterogeneous network communications unit 1210 may receive, through the first interface, a seventh part of PDCP PDUs sent by the base station, where the seventh part of PDCP PDUs are some or all PDCP PDUs that need to be transmitted by the base station to the UE.

The data transmission unit 1230 may perform encapsulation processing on the seventh part of PDCP PDUs to obtain a seventh part of encapsulated data packets, and send the seventh part of encapsulated data packets to the UE over the second RB.

FIG. 13 is a schematic block diagram of a UE according to an embodiment of the present invention. An example of a UE 1300 is a UE 130 in FIG. 1. The UE 1300 includes a receiving unit 1310, a bearer establishing unit 1320, and a splitting and aggregating unit 1320.

The receiving unit 1310 is configured to, in a case in which a base station of a first communications network determines that heterogeneous network aggregation is to be enabled, receive a connection reconfiguration request message from the base station, where the connection reconfiguration request message is used to instruct to establish a second RB between the UE 1300 and an access network device of a second communications network.

The bearer establishing unit 1320 is configured to establish the second RB with the access network device according to the connection reconfiguration request message, so that the base station exchanges data corresponding to the second RB with the access network device.

The splitting and aggregating unit 1330 is configured to, after the bearer establishing unit establishes the second RB, perform aggregation or splitting on data corresponding to a first RB between the base station and the UE and the data corresponding to the second RB.

The data that corresponds to the second RB and is exchanged by the base station with the access network device is PDCP PDUs.

In this embodiment of the present invention, in a case in which a base station of a first communications network determines that heterogeneous network aggregation is to be enabled, the base station establishes, with an access network device, a second RB between the access network device and a UE, so that the UE can perform aggregation or splitting on data corresponding to the second RB and data corresponding to a first RB between the base station and the UE, and it can be implemented that the UE performs data transmission in two communications networks, and therefore, a utilization rate of network resources can be improved, and a data transmission rate and a peak rate of the UE can be improved.

For other functions and operations of the UE 1300, reference may be made to the processes related to a UE in the foregoing method embodiments from FIG. 2 to FIG. 10, and to avoid repetition, details are not described herein again.

Optionally, in an embodiment, the first communications network may be an LTE network, and the second communications network may be a non-LTE network.

Optionally, in another embodiment, the connection reconfiguration request message may further carry a mapping relationship between an IP flow and the second RB.

Optionally, in another embodiment, the splitting and aggregating unit 1330 may determine a first IP flow and a second IP flow that need to be transmitted to the base station, where the second IP flow corresponds to the second RB in the mapping relationship; perform encapsulation processing on data packets of the second IP flow to obtain a second part of encapsulated data packets; and send the second part of encapsulated data packets to the access network device over the second RB, and send data packets of the first IP flow to the base station over the first RB.

Optionally, in another embodiment, the splitting and aggregating unit 1330 may perform RLP layer encapsulation processing or local IP layer encapsulation processing on the data packets of the second IP flow to obtain the second part of encapsulated data packets.

Optionally, in another embodiment, the splitting and aggregating unit 1330 may receive, over the first RB, data packets that are of a fourth IP flow and are sent by the base station, and receive, over the second RB, a third part of encapsulated data packets sent by the access network device, where the third part of encapsulated data packets are obtained by perform encapsulation processing, by the access network device, on a third part of PDCP PDUs corresponding to data packets of a third IP flow, where the third IP flow corresponds to the second RB in the mapping relationship; perform decapsulation processing on data of the fourth IP flow to obtain a fourth part of PDCP PDUs, and perform decapsulation processing on the third part of encapsulated data packets to obtain the third part of PDCP PDUs; and perform aggregation on the third part of PDCP PDUs and the fourth part of PDCP PDUs.

Optionally, in another embodiment, the splitting and aggregating unit 1330 may perform RLP layer decapsulation processing on the third part of encapsulated data packets to obtain the third part of PDCP PDUs, or perform local IP layer decapsulation processing on the third part of encapsulated data packets to obtain the third part of PDCP PDUs.

Optionally, in another embodiment, the splitting and aggregating unit 1330 may divide PDCP PDUs that need to be transmitted to the base station into a fifth part of PDCP PDUs and a sixth part of PDCP PDUs; perform encapsulation processing on the sixth part of PDCP PDUs to obtain a sixth part of encapsulated data packets, and obtain a fifth part of encapsulated data packets after performing processing on the fifth part of PDCP PDUs; and send the sixth part of encapsulated data packets to the access network device over the second RB and send the fifth part of encapsulated data packets to the base station over the first RB.

Optionally, in another embodiment, the splitting and aggregating unit 1330 may receive, over the first RB, an eighth part of encapsulated data packets sent by the base station, and receive, over the second RB, a seventh part of encapsulated data packets sent by the access network device; perform decapsulation processing on the eighth part of encapsulated data packets to obtain an eighth part of PDCP PDUs, and perform decapsulation processing on the seventh part of encapsulated data packets to obtain a seventh part of PDCP PDUs; and perform aggregation on the seventh part of PDCP PDUs and the eighth part of PDCP PDUs.

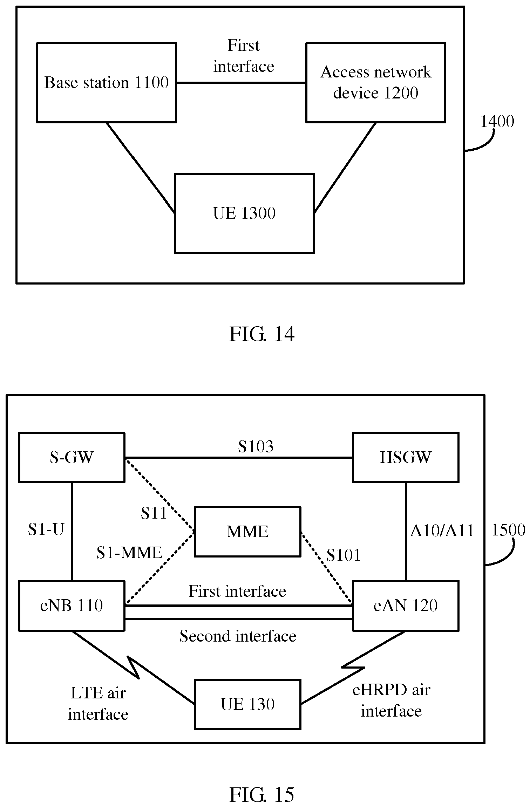

FIG. 14 is a schematic block diagram of a data transmission system according to an embodiment of the present invention. The system 1400 in FIG. 14 includes a base station 1100, an access network device 1200, or a UE 1300.

In this embodiment of the present invention, in a case of determining that heterogeneous network aggregation is to be enabled, a base station of a first communications network establishes a first interface with an access network device of a second communications network, and notifies the access network device and a UE to establish a second RB between the access network device and the UE, so that the base station can perform aggregation or splitting on data corresponding to the second RB and data corresponding to a first RB between the base station and the UE, and it can be implemented that the UE performs data transmission in two communications networks at the same time, and therefore, a utilization rate of network resources can be improved, and a data transmission rate and a peak rate of the UE can be improved.

FIG. 15 is a schematic block diagram of an example of a data transmission system according to an embodiment of the present invention. In FIG. 15, descriptions are made with reference to the scenario in FIG. 1. It is assumed that a first communications network is an LTE network, a second communications network is a CDMA2000 eHRPD network, the base station 1100 is an eNB 110, the access network device 1200 is an eAN 120, and the UE 1300 is a UE 130 in FIG. 1.

A system 1500 in FIG. 15 includes the eNB 110, the eAN 120, and the UE 130. There is a first interface and a second interface between the eNB 110 and the eAN 120, data transmission may be performed between the eNB 110 and the UE 130 through an LTE air interface, and data transmission may be performed between the eAN 120 and the UE 130 through an eHRPD air interface. For processes of signaling interaction and data transmission between them, reference may be made to a process in the foregoing method embodiments from FIG. 2 to FIG. 10, and to avoid repetition, details are not described herein again.

In addition, the system 1500 may further include an S-GW, an MME, and an HSGW (HRPD Serving Gateway, HRPD serving gateway). There are corresponding interfaces between the S-GW, the MME, and the eNB 110, for example, there is an S1-U interface between the S-GW and the eNB 110, there is an S11 interface between the S-GW and the MME, and there is an S1-MME interface between the MME and the eNB 110. For a process of interaction between them, reference may be made to descriptions in FIG. 5 and FIG. 10, and to avoid repetition, details are not described herein again.

In addition, there is an A10/A11 interface between the HSGW and the eAN 120, there may also be an S101 interface between the MME and the eAN 120, and there may be an S103 interface between the S-GW and the HSGW. For a process of interaction between them, reference may be made to the prior art, and to avoid repetition, details are not described herein again.

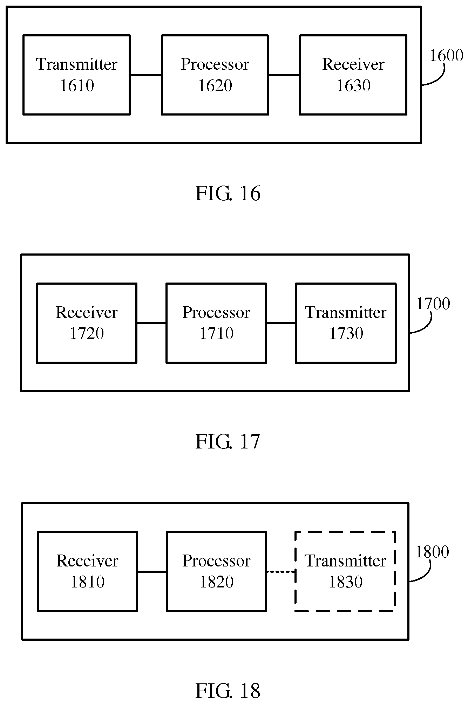

FIG. 16 is a schematic block diagram of a base station according to an embodiment of the present invention. A base station 1600 belongs to a first communications network. The base station 1600 includes a transmitter 1610, a processor 1620 and a receiver 1630.

The processor 1620 establishes a first interface with an access network device of a second communications network in a case of determining that heterogeneous network aggregation is to be enabled. The transmitter 1610 notifies the access network device to establish a second RB between an access network device and a UE, and notifies the UE to establish the second RB. After the second RB is established, the processor 1620 performs aggregation or splitting on data corresponding to the second RB and data corresponding to a first RB between the base station and the UE.

The transmitter 1610 and the receiver 1630 exchange the data corresponding to the second RB with the access network device through the first interface, and the data that corresponds to the second RB and is exchanged by the transmitter 1610 and the receiver 1630 with the access network device through the first interface is PDCP PDUs.

In this embodiment of the present invention, in a case of determining that heterogeneous network aggregation is to be enabled, a base station of a first communications network establishes a first interface with an access network device of a second communications network, and notifies the access network device and a UE to establish a second RB between the access network device and the UE, so that the base station can perform aggregation or splitting on data corresponding to the second RB and data corresponding to a first RB between the base station and the UE, and it can be implemented that the UE performs data transmission in two communications networks at the same time, and therefore, a utilization rate of network resources can be improved, and a data transmission rate and a peak rate of the UE can be improved.

For other functions and operations of the base station 1600, reference may be made to the processes related to a base station in the foregoing method embodiments from FIG. 2 to FIG. 10, and to avoid repetition, details are not described herein again.

Optionally, in an embodiment, the first communications network may be an LTE network, and the second communications network may be a non-LTE network.

Optionally, in an embodiment, the transmitter 1610 may send a connection reconfiguration request message to the UE, where the connection reconfiguration request message is used to instruct to establish the second RB. The transmitter 1610 may send a negotiation message to the access network device through a second interface, where the negotiation message includes data plane information, of the base station, on the first interface, and the negotiation message is further used to instruct to establish the second RB. The receiver 1630 may receive, through the second interface, an acknowledgment message generated by the access network device according to the negotiation message, where the acknowledgment message includes data plane information, of the access network device, on the first interface.

Optionally, in another embodiment, the processor 1620 may determine a mapping relationship between an IP flow and the second RB. The transmitter 1610 may further add the mapping relationship to the connection reconfiguration request message.

Optionally, in another embodiment, the receiver 1630 may receive, over the first RB, data packets that are of a first IP flow and are sent by the UE, and receive a second part of PDCP PDUs from the access network device through the first interface, where the second part of PDCP PDUs are obtained by performing decapsulation processing, by the access network device, on a second part of encapsulated data packets sent by the UE over the second RB, where the second part of encapsulated data packets are obtained by performing encapsulation processing on data packets of a second IP flow by the UE, and the second IP flow corresponds to the second RB in the mapping relationship. The processor 1620 may perform processing on the data packets of the first IP flow to obtain a first part of PDCP PDUs, and perform aggregation on the first part of PDCP PDUs and the second part of PDCP PDUs.

Optionally, in another embodiment, the processor 1620 may acquire a third IP flow and a fourth IP flow that need to be transmitted to the UE, where the third IP flow corresponds to the second RB in the mapping relationship, and perform processing on data packets of the third IP flow to obtain a third part of PDCP PDUs. The transmitter 1610 may send the third part of PDCP PDUs to the access network device through the first interface. The transmitter 1610 may further send data packets of the fourth IP flow to the UE over the first RB.

Optionally, in another embodiment, the receiver 1630 may receive, over the first RB, a fifth part of encapsulated data packets sent by the UE, and may receive a sixth part of PDCP PDUs from the access network device through the first interface, where the sixth part of PDCP PDUs are obtained by performing processing, by the access network device, on a sixth part of encapsulated data packets sent by the UE over the second RB. The processor 1620 may process the fifth part of encapsulated data packets to obtain a fifth part of PDCP PDUs, and perform aggregation on the fifth part of PDCP PDUs and the sixth part of PDCP PDUs.

Optionally, in another embodiment, the processor 1620 may divide PDCP PDUs that need to be transmitted to the UE into a seventh part of PDCP PDUs and an eighth part of PDCP PDUs. The processor 1620 may perform encapsulation processing on the eighth part of PDCP PDUs to obtain an eighth part of encapsulated data packets. The transmitter 1610 may send the seventh part of PDCP PDUs to the access network device through the first interface, and send the eighth part of encapsulated data packets to the UE over the first RB.

FIG. 17 is a schematic block diagram of an access network device according to an embodiment of the present invention. An access network device 1700 belongs to a second communications network. The access network device 1700 may include a processor 1710, a receiver 1720, and a transmitter 1730.

In a case in which a base station of a first communications network determines that heterogeneous network aggregation is to be enabled, the processor 1710 establishes a first interface with the base station, and establishes a second RB with a UE. The receiver 1720 and the transmitter 1730 transmit data with the UE over the second RB.

The receiver 1720 and the transmitter 1730 exchange data corresponding to the second RB with the base station through the first interface, and the data that corresponds to the second RB and is exchanged with the base station through the first interface is PDCP PDUs.

In this embodiment of the present invention, in a case in which a base station of a first communications network determines that heterogeneous network aggregation is to be enabled, an access network device of a second communications network establishes a first interface with the base station, and establishes a second RB with the UE, so that after the second RB is established, the base station can perform data transmission with the UE over the second RB by using the access network device, and it can be implemented that the UE performs data transmission in two communications networks at the same time, and therefore, a utilization rate of network resources can be improved, and a data transmission rate and a peak rate of the UE can be improved.

For other functions and operations of the access network device 1700, reference may be made to the processes related to an access network device in the foregoing method embodiments from FIG. 2 to FIG. 10, and to avoid repetition, details are not described herein again.

Optionally, in another embodiment, the first communications network may be an LTE network, and the second communications network may be a non-LTE network.

Optionally, in an embodiment, the receiver 1720 may receive a negotiation message from the base station through a second interface. The processor 1710 may generate an acknowledgement message according to the negotiation message received by the receiver 1720. The transmitter 1730 may send the acknowledgement message to the base station through the second interface, where the negotiation message includes data plane information, of the base station, on the first interface, the negotiation message is further used to instruct to establish the second RB, and the acknowledgement message includes data plane information, of the access network device, on the first interface 1700.

The processor 1710 may establish the second RB with the UE according to the negotiation message.

Optionally, in another embodiment, the receiver 1720 may receive, over the second RB, a second part of encapsulated data packets sent by the UE, where the second part of encapsulated data packets are obtained by performing encapsulation on data packets of a second Internet Protocol IP flow by the UE.

The processor 1710 may perform decapsulation processing on the second part of encapsulated data packets to obtain a second part of PDCP PDUs. The transmitter 1730 may send the second part of PDCP PDUs to the base station through the first interface.

Optionally, in another embodiment, the receiver 1720 may receive a third part of PDCP PDUs sent by the base station through the first interface, where the third part of PDCP are obtained by performing processing on data packets of a third IP flow by the base station.

The processor 1710 may perform encapsulation processing on the third part of PDCP PDUs to obtain a third part of encapsulated data packets. The transmitter 1730 may send the third part of encapsulated data packets to the UE over the second RB.

Optionally, in another embodiment, the receiver 1720 may receive, over the second RB, a sixth part of encapsulated data packets sent by the UE, where the sixth part of encapsulated data packets are obtained by performing encapsulation on a sixth part of PDCP PDUs by the UE, and the sixth part of PDCP PDUs are some or all PDCP PDUs that need to be transmitted by the UE to the base station.

The processor 1710 may perform decapsulation processing on the sixth part of encapsulated data packets to obtain the sixth part of PDCP PDUs. The transmitter 1730 may send the sixth part of PDCP PDUs to the base station through the first interface.

Optionally, in another embodiment, the receiver 1720 may receive, through the first interface, a seventh part of PDCP PDUs sent by the base station, where the seventh part of PDCP PDUs are some or all PDCP PDUs that need to be transmitted by the base station to the UE.

The processor 1710 may perform encapsulation processing on the seventh part of PDCP PDUs to obtain a seventh part of encapsulated data packets. The transmitter 1730 may send the seventh part of encapsulated data packets to the UE over the second RB.

FIG. 18 is a schematic block diagram of a UE according to an embodiment of the present invention. A UE 1800 includes a receiver 1810 and a processor 1820.

The receiver 1810 receives a connection reconfiguration request message from the base station in a case in which a base station of a first communications network determines that heterogeneous network aggregation is to be enabled, where the connection reconfiguration request message is used to instruct to establish a second RB between the UE 1800 and an access network device of a second communications network.

The processor 1820 establishes the second RB with the access network device according to the connection reconfiguration request message, so that the base station exchanges data corresponding to the second RB with the access network device.

After establishing the second RB, the processor 1820 further perform aggregation or splitting on the data corresponding to the second RB and data corresponding to a first RB between the base station and the user equipment UE.

The data that corresponds to the second RB and is exchanged by the base station with the access network device is PDCP PDUs.

In this embodiment of the present invention, in a case in which a base station of a first communications network determines that heterogeneous network aggregation is to be enabled, the base station establishes, with an access network device, a second RB between the access network device and a UE, so that the UE can perform aggregation or splitting on data corresponding to the second RB and data corresponding to a first RB between the base station and the UE, and it can be implemented that the UE performs data transmission in two communications networks, and therefore, a utilization rate of network resources can be improved, and a data transmission rate and a peak rate of the UE can be improved.

For other functions and operations of the UE 1800, reference may be made to the processes related to a UE in the foregoing method embodiments from FIG. 2 to FIG. 10, and to avoid repetition, details are not described herein again.

Optionally, in an embodiment, the first communications network may be an LTE network, and the second communications network may be a non-LTE network.

Optionally, in another embodiment, the connection reconfiguration request message may further carry a mapping relationship between an IP flow and the second RB.

Optionally, in another embodiment, the UE 1800 may further include a transmitter 1830. The processor 1820 may determine a first IP flow and a second IP flow that need to be transmitted to the base station, where the second IP flow corresponds to the second RB in the mapping relationship. The processor 1820 may further perform encapsulation processing on data packets of the second IP flow to obtain a second part of encapsulated data packets. The transmitter 1830 may send the second part of encapsulated data packets to the access network device over the second RB, and send data packets of the first IP flow to the base station over the first RB.

Optionally, in another embodiment, the receiver 1810 may receive, over the first RB, data packets that are of a fourth IP flow and are sent by the base station, and receive, over the second RB, a third part of encapsulated data packets sent by the access network device, where the third part of encapsulated data packets are obtained by perform encapsulation processing, by the access network device, on a third part of PDCP PDUs corresponding to data packets of a third IP flow, and the third IP flow corresponds to the second RB in the mapping relationship. The processor 1820 may perform decapsulation processing on data of the fourth IP flow to obtain a fourth part of PDCP PDUs, and perform decapsulation processing on the third part of encapsulated data packets to obtain the third part of PDCP PDUs. The processor 1820 may perform aggregation on the third part of PDCP PDUs and the fourth part of PDCP PDUs.

Optionally, in another embodiment, the processor 1820 may divide PDCP PDUs that need to be transmitted to the base station into a fifth part of PDCP PDUs and a sixth part of PDCP PDUs. The processor 1820 may perform encapsulation processing on the sixth part of PDCP PDUs to obtain a sixth part of encapsulated data packets, and obtain a fifth part of encapsulated data packets after performing processing on the fifth part of PDCP PDUs. The transmitter 1830 may send the sixth part of encapsulated data packets to the access network device over the second RB, and send the fifth part of encapsulated data packets to the base station over the first RB.

Optionally, in another embodiment, the receiver 1810 may receive, over the first RB, an eighth part of encapsulated data packets sent by the base station, and receive, over the second RB, a seventh part of encapsulated data packets sent by the access network device. The processor 1820 may perform decapsulation processing on the eighth part of encapsulated data packets to obtain an eighth part of PDCP PDUs, and perform decapsulation processing on the seventh part of encapsulated data packets to obtain a seventh part of PDCP PDUs. The processor 1820 may further perform aggregation on the seventh part of PDCP PDUs and the eighth part of PDCP PDUs.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A base station, wherein the base station belongs to a first communications network, comprising:
a splitting and aggregating unit (1110), configured to establish a first interface with an access network device of a second communications network in a case of determining that heterogeneous network aggregation is to be enabled; and
a notifying unit (1120), configured to, after the splitting and aggregating unit establishes the first interface with the access network device of the second communications network, notify the access network device to establish a second radio bearer between the access network device and a user equipment UE, and notify the UE to establish the second radio bearer; wherein
the splitting and aggregating unit is further configured to exchange data corresponding to the second radio bearer with the access network device through the first interface after the second radio bearer is established, and perform aggregation or splitting on the data corresponding to the second radio bearer and data corresponding to a first radio bearer between the base station and the UE; and
the data that corresponds to the second radio bearer and is exchanged by the splitting and aggregating unit with the access network device through the first interface is Packet Data Convergence Protocol PDCP protocol data units PDUs;
wherein:
the notifying unit is specifically configured to send a negotiation message to the access network device through a second interface, wherein the negotiation message comprises data plane information, of the base station, on the first interface, and the negotiation message is further used to instruct to establish the second radio bearer; and the notifying unit is further configured to send a connection reconfiguration request message to the UE, wherein the connection reconfiguration request message is used to instruct to establish the second radio bearer; and
the notifying unit is further configured to receive, through the second interface, an acknowledgment message generated by the access network device according to the negotiation message, wherein the acknowledgment message comprises data plane information, of the access network device, on the first interface.

2. The base station according to claim 1, wherein the first communications network is a Long Term Evolution LTE network, and the second communications network is a non-LTE network.

3. The base station according to claim 1, further comprising a first determining unit (1130), wherein
the first determining unit is configured to determine a mapping relationship between an Internet Protocol IP flow and the second radio bearer; and
the notifying unit is further configured to add the mapping relationship to the connection reconfiguration request message.

4. The base station according to claim 3, wherein that the splitting and aggregating unit is further configured to exchange data corresponding to the second radio bearer with the access network device through the first interface after the second radio bearer is established, and perform aggregation on the data corresponding to the second radio bearer and data corresponding to a first radio bearer between the base station and the UE specifically comprises that:
the splitting and aggregating unit is configured to receive, over the first radio bearer, data packets that are of a first Internet Protocol IP flow and are sent by the UE, and receive a second part of PDCP PDUs from the access network device through the first interface, wherein the second part of PDCP PDUs are obtained by performing decapsulation processing, by the access network device, on a second part of encapsulated data packets sent by the UE over the second radio bearer, wherein the second part of encapsulated data packets are obtained by performing encapsulation processing on data packets of a second IP flow by the UE, and the second IP flow corresponds to the second radio bearer in the mapping relationship; perform processing on the data packets of the first IP flow to obtain a first part of PDCP PDUs; and perform aggregation on the first part of PDCP PDUs and the second part of PDCP PDUs.

5. The base station according to claim 3, wherein that the splitting and aggregating unit is further configured to exchange data corresponding to the second radio bearer with the access network device through the first interface after the second radio bearer is established, and perform splitting on the data corresponding to the second radio bearer and data corresponding to a first radio bearer between the base station and the UE specifically comprises that:
the splitting and aggregating unit is configured to acquire a third IP flow and a fourth IP flow that need to be transmitted to the UE, wherein the third IP flow corresponds to the second radio bearer in the mapping relationship; perform processing on data packets of the third IP flow to obtain a third part of PDCP PDUs; and send the third part of PDCP PDUs to the access network device through the first interface, and send data packets of the fourth IP flow to the UE over the first radio bearer.

6. An access network device, wherein the access network device belongs to a second communications network, comprising:
a heterogeneous network communications unit, configured to establish a first interface with a base station of a first communications network in a case in which the base station determines that heterogeneous network aggregation is to be enabled;
a bearer establishing unit, configured to establish a second radio bearer with the UE; and
a data transmission unit, configured to transmit data with the UE over the second radio bearer; wherein
the heterogeneous network communications unit is configured to exchange data corresponding to the second radio bearer with the base station through the first interface, wherein the data that corresponds to the second radio bearer and is exchanged with the base station through the first interface is Packet Data Convergence Protocol PDCP protocol data units PDUs;
wherein that the heterogeneous network communications unit is configured to establish a first interface with a base station of a first communications network in a case in which the base station determines that heterogeneous network aggregation is to be enabled specifically comprises that: the heterogeneous network communications unit is configured to receive a negotiation message from the base station through a second interface, generate an acknowledgment message according to the negotiation message, and send the acknowledgment message to the base station through the second interface, wherein the negotiation message comprises data plane information, of the base station, on the first interface, the negotiation message is further used to instruct to establish the second radio bearer, and the acknowledgment message comprises data plane information, of the access network device, on the first interface; and
the bearer establishing unit is specifically configured to establish the second radio bearer with the UE according to the negotiation message.

7. The access network device according to claim 6, wherein the data transmission unit is specifically configured to receive, over the second radio bearer, a second part of encapsulated data packets sent by the UE, wherein the second part of encapsulated data packets are obtained by performing encapsulation processing on data packets of a second Internet Protocol IP flow by the UE; wherein
that the heterogeneous network communications unit is configured to exchange data corresponding to the second radio bearer with the base station through the first interface specifically comprises that: the heterogeneous network communications unit is configured to perform decapsulation processing on the second part of encapsulated data packets to obtain a second part of PDCP PDUs, and send the second part of PDCP PDUs to the base station through the first interface.

8. A user equipment, which is adapted to communicate with the base station according to any of claims 1-5 and the access network device according to claim 6 or 7, comprising:
a receiving unit, configured to receive a connection reconfiguration request message from a base station of a first communications network in a case in which the base station determines that heterogeneous network aggregation is to be enabled, wherein the connection reconfiguration request message is used to instruct to establish a second radio bearer between the UE and an access network device of a second communications network;
a bearer establishing unit, configured to establish the second radio bearer with the access network device according to the connection reconfiguration request message, so that the base station exchanges data corresponding to the second radio bearer with the access network device; and
a splitting and aggregating unit, configured to, after the bearer establishing unit establishes the second radio bearer, perform aggregation or splitting on data corresponding to a first radio bearer between the base station and the user equipment UE and the data corresponding to the second radio bearer; wherein
the data that corresponds to the second radio bearer and is exchanged by the base station with the access network device is Packet Data Convergence Protocol PDCP protocol data units PDUs.

9. The user equipment according to claim 8, wherein the connection reconfiguration request message further carries a mapping relationship between an Internet Protocol IP flow and the second radio bearer.

10. The user equipment according to claim 9, wherein that the splitting and aggregating unit is configured to, after the bearer establishing unit establishes the second radio bearer, perform splitting on the data corresponding to the first radio bearer between the base station and the user equipment UE and the data corresponding to the second radio bearer specifically comprises that:
the splitting and aggregating unit is configured to determine a first Internet Protocol IP flow and a second IP flow that need to be transmitted to the base station, wherein the second IP flow corresponds to the second radio bearer in the mapping relationship; perform encapsulation processing on data packets of the second IP flow to obtain a second part of encapsulated data packets; and send the second part of encapsulated data packets to the access network device over the second radio bearer, and send data packets of the first IP flow to the base station over the first radio bearer.

11. The user equipment according to claim 9, wherein that the splitting and aggregating unit is configured to, after the bearer establishing unit establishes the second radio bearer, perform aggregation on the data corresponding to the first radio bearer between the base station and the user equipment UE and the data corresponding to the second radio bearer specifically comprises that:
the splitting and aggregating unit is configured to receive, over the first radio bearer, data packets that are of a fourth IP flow and are sent by the base station, and receive, over the second radio bearer, a third part of encapsulated data packets sent by the access network device, wherein the third part of encapsulated data packets are obtained by performing encapsulation processing, by the access network device, on a third part of PDCP PDUs corresponding to data packets of a third IP flow, wherein the third IP flow corresponds to the second radio bearer in the mapping relationship; perform decapsulation processing on data of the fourth IP flow to obtain a fourth part of PDCP PDUs, and perform decapsulation processing on the third part of encapsulated data packets to obtain the third part of PDCP PDUs; and perform aggregation on the third part of PDCP PDUs and the fourth part of PDCP PDUs.

12. The user equipment according to claim 8, wherein that the splitting and aggregating unit is configured to, after the bearer establishing unit establishes the second radio bearer, perform splitting on the data corresponding to the first radio bearer between the base station and the user equipment UE and the data corresponding to the second radio bearer specifically comprises that:
the splitting and aggregating unit is configured to divide PDCP PDUs that need to be transmitted to the base station into a fifth part of PDCP PDUs and a sixth part of PDCP PDUs; perform encapsulation processing on the sixth part of PDCP PDUs to obtain a sixth part of encapsulated data packets, and obtain a fifth part of encapsulated data packets after performing processing on the fifth part of PDCP PDUs; and send the sixth part of encapsulated data packets to the access network device over the second radio bearer, and send the fifth part of encapsulated data packets to the base station over the first radio bearer.

13. The user equipment according to claim 8, wherein that the splitting and aggregating unit is configured to, after the bearer establishing unit establishes the second radio bearer, perform aggregation on the data corresponding to the first radio bearer between the base station and the user equipment UE and the data corresponding to the second radio bearer specifically comprises that:
the splitting and aggregating unit is configured to receive, over the first radio bearer, an eighth part of encapsulated data packets sent by the base station, and receive, over the second radio bearer, a seventh part of encapsulated data packets sent by the access network device; perform decapsulation processing on the eighth part of encapsulated data packets to obtain an eighth part of PDCP PDUs, and perform decapsulation processing on the seventh part of encapsulated data packets to obtain a seventh part of PDCP PDUs; and aggregate the seventh part of PDCP PDUs and the eighth part of PDCP PDUs.

## Patentansprüche

1. Basisstation, wobei die Basisstation zu einem ersten Kommunikationsnetz gehört, umfassend:
eine Aufteilungs- und Aggregiereinheit (1110), ausgelegt zum Herstellen einer ersten Schnittstelle mit einer Zugangsnetzvorrichtung eines zweiten Kommunikationsnetzes, falls bestimmt wird, dass heterogene Netzaggregation freizugeben ist; und
eine Benachrichtigungseinheit (1120), die dafür ausgelegt ist, nachdem die Aufteilungs- und Aggregiereinheit die erste Schnittstelle mit der Zugangsnetzvorrichtung des zweiten Kommunikationsnetzes herstellt, die Zugangsnetzvorrichtung zu benachrichtigen, einen zweiten Funkträger zwischen der Zugangsnetzvorrichtung und einem Benutzergerät UE herzustellen, und das UE zu benachrichtigen, den zweiten Funkträger herzustellen; wobei
die Aufteilungs- und Aggregiereinheit ferner ausgelegt ist zum Austauschen von Daten entsprechend dem zweiten Funkträger mit der Zugangsnetzvorrichtung mittels der ersten Schnittstelle, nachdem der zweite Funkträger hergestellt ist, und Ausführen von Aggregation oder Aufteilung an den Daten entsprechend dem zweiten Funkträger und Daten entsprechend einem ersten Funkträger zwischen der Basisstation und dem UE; und
die Daten, die dem zweiten Funkträger entsprechen und durch die Aufteilungs- und Aggregiereinheit mit der Zugangsnetzvorrichtung mittels der ersten Schnittstelle ausgetauscht werden, Protokolldateneinheiten PDUs des "Packet Data Convergence Protocol" PDCP sind;
wobei
die Benachrichtigungseinheit speziell ausgelegt ist zum Senden einer Aushandlungsnachricht zu der Zugangsnetzvorrichtung mittels einer zweiten Schnittstelle, wobei die Aushandlungsnachricht Datenebeneninformationen der Basisstation umfasst, auf der ersten Schnittstelle und die Aushandlungsnachricht ferner verwendet wird, um anzuweisen, den zweiten Funkträger herzustellen; und die Benachrichtigungseinheit ferner ausgelegt ist zum Senden einer Verbindungsumkonfigurations-Anforderungsnachricht zum UE, wobei die Verbindungsumkonfigurations-Anforderungsnachricht verwendet wird, um anzuweisen, den zweiten Funkträger herzustellen; und
die Benachrichtigungseinheit ferner ausgelegt ist zum Empfangen einer Bestätigungsnachricht, die durch die Zugangsnetzvorrichtung gemäß der Aushandlungsnachricht erzeugt wird, mittels der zweiten Schnittstelle, wobei die Betätigungsnachricht Datenebeneninformationen der Zugangsnetzvorrichtung auf der ersten Schnittstelle umfasst.

2. Basisstation nach Anspruch 1, wobei das erste Kommunikationsnetz ein "Long Term Evolution"- bzw. LTE-Netz ist und das zweite Kommunikationsnetz ein Nicht-LTE-Netz ist.

3. Basisstation nach Anspruch 1, die ferner eine erste Bestimmungseinheit (1130) umfasst, wobei
die erste Bestimmungseinheit ausgelegt ist zum Bestimmen einer Abbildungsbeziehung zwischen einem Internetprotokoll- bzw. IP-Fluss und dem zweiten Funkträger; und
die Benachrichtigungseinheit ferner ausgelegt ist zum Hinzufügen der Abbildungsbeziehung zu der Verbindungsumkonfigurations-Anforderungsnachricht.

4. Basisstation nach Anspruch 3, wobei, dass die Aufteilungs- und Aggregiereinheit ferner ausgelegt ist zum Austauschen von Daten entsprechend dem zweiten Funkträger mit der Zugangsnetzvorrichtung mittels der ersten Schnittstelle, nachdem der zweite Funkträger hergestellt ist, und Ausführen von Aggregation an den Daten entsprechend dem zweiten Funkträger und Daten entsprechend einem ersten Funkträger zwischen der Basisstation und dem UE speziell Folgendes umfasst:
die Aufteilungs- und Aggregiereinheit ist ausgelegt zum Empfangen von Datenpaketen über den ersten Funkträger, die von einem ersten Internetprotokoll- bzw. IP-Fluss sind und durch das UE gesendet werden, und Empfangen eines zweiten Teils von PDCP-PDUs von der Zugangsnetzvorrichtung mittels der ersten Schnittstelle, wobei der zweite Teil von PDCP-PDUs erhalten wird, indem Entkapselungsverarbeitung durch die Zugangsnetzvorrichtung an einem zweiten Teil eingekapselter Datenpakete ausgeführt wird, die durch das UE über den zweiten Funkträger gesendet werden, wobei der zweite Teil eingekapselter Datenpakete durch Ausführen von Einkapselungsverarbeitung an Datenpaketen eines zweiten IP-Flusses durch das UE erhalten wird und der zweite IP-Fluss in der Abbildungsbeziehung dem zweiten Funkträger entspricht; Ausführen von Verarbeitung an den Datenpaketen des ersten IP-Flusses, um einen ersten Teil von PDCP-PDUs zu erhalten; und Ausführen von Aggregation an dem ersten Teil von PDCP-PDUs und dem zweiten Teil von PDCP-PDUs.

5. Basisstation nach Anspruch 3, wobei, dass die Aufteilungs- und Aggregiereinheit ferner ausgelegt ist zum Austauschen von Daten entsprechend dem zweiten Funkträger mit der Zugangsnetzvorrichtung mittels der ersten Schnittstelle, nachdem der zweite Funkträger hergestellt ist, und Ausführen von Aufteilung an den Daten entsprechend dem zweiten Funkträger und Daten entsprechend einem ersten Funkträger zwischen der Basisstation und dem UE speziell Folgendes umfasst:
die Aufteilungs- und Aggregiereinheit ist ausgelegt zum Beschaffen eines dritten IP-Flusses und eines vierten IP-Flusses, die zum UE gesendet werden müssen, wobei der dritte IP-Fluss in der Abbildungsbeziehung dem zweiten Funkträger entspricht; Ausführen von Verarbeitung an Datenpaketen des dritten IP-Flusses, um einen dritten Teil von PDCP-PDUs zu erhalten; und Senden des dritten Teils von PDCP-PDUs zu der Zugangsnetzvorrichtung mittels der ersten Schnittstelle und Senden von Datenpaketen des vierten IP-Flusses zum UE über den ersten Funkträger.

6. Zugangsnetzvorrichtung, wobei die Zugangsnetzvorrichtung zu einem zweiten Kommunikationsnetz gehört, umfassend:
eine heterogene Netzkommunikationseinheit, ausgelegt zum Herstellen einer ersten Schnittstelle mit einer Basisstation eines ersten Kommunikationsnetzes, falls die Basisstation bestimmt, dass heterogene Netzaggregation freizugeben ist;
eine Trägerherstellungseinheit, ausgelegt zum Herstellen eines zweiten Funkträgers mit dem UE; und
eine Datenübertragungseinheit, ausgelegt zum Senden von Daten mit dem UE über den zweiten Funkträger; wobei
die heterogene Netzkommunikationseinheit ausgelegt ist zum Austauschen von Daten entsprechend dem zweiten Funkträger mit der Basisstation mittels der ersten Schnittstelle, wobei die Daten, die dem zweiten Funkträger entsprechen und mit der Basisstation mittels der ersten Schnittstelle ausgetauscht werden, Protokolldateneinheiten PDUs des "Packet Data Convergence Protocol" PDCP sind;
wobei, dass die heterogene Netzkommunikationseinheit ausgelegt ist zum Herstellen einer ersten Schnittstelle mit einer Basisstation eines ersten Kommunikationsnetzes, falls die Basisstation bestimmt, dass heterogene Netzaggregation freizugeben ist, speziell Folgendes umfasst: Die heterogene Netzkommunikationseinheit ist ausgelegt zum Empfangen einer Aushandlungsnachricht von der Basisstation mittels einer zweiten Schnittstelle, Erzeugen einer Bestätigungsnachricht gemäß der Aushandlungsnachricht und Senden der Bestätigungsnachricht zur Basisstation mittels der zweiten Schnittstelle, wobei die Aushandlungsnachricht Datenebeneninformationen der Basisstation umfasst, auf der ersten Schnittstelle, die Aushandlungsnachricht ferner verwendet wird, um anzuweisen, den zweiten Funkträger herzustellen, und die Bestätigungsnachricht Datenebeneninformationen der Zugangsnetzvorrichtung auf der ersten Schnittstelle umfasst; und
die Trägerherstellungseinheit speziell ausgelegt ist zum Herstellen des zweiten Funkträgers mit dem UE gemäß der Aushandlungsnachricht.

7. Zugangsnetzvorrichtung nach Anspruch 6, wobei die Datenübertragungseinheit speziell ausgelegt ist zum Empfangen eines zweiten Teils eingekapselter Datenpakete über den zweiten Funkträger, die durch das UE gesendet werden, wobei der zweite Teil eingekapselter Datenpakete durch Ausführen von Einkapselungsverarbeitung an Datenpaketen eines zweiten Internetprotokoll- bzw. IP-Flusses durch das UE erhalten wird; wobei
dass die heterogene Netzkommunikationseinheit ausgelegt ist zum Austauschen von Daten entsprechend dem zweiten Funkträger mit der Basisstation mittels der ersten Schnittstelle speziell Folgendes umfasst: Die heterogene Netzkommunikationseinheit ist ausgelegt zum Ausführen von Entkapselungsverarbeitung an dem zweiten Teil eingekapselter Datenpakete, um einen zweiten Teil von PDCP-PDUs zu erhalten,
und Senden des zweiten Teils von PDCP-PDUs zur Basisstation mittels der ersten Schnittstelle.

8. Benutzergerät, das dafür ausgelegt ist, mit der Basisstation nach einem der Ansprüche 1-5 und der Zugangsnetzvorrichtung nach Anspruch 6 oder 7 zu kommunizieren, umfassend:
eine Empfangseinheit, ausgelegt zum Empfangen einer Verbindungsumkonfigurations-Anforderungsnachricht von einer Basisstation eines ersten Kommunikationsnetzes, falls die Basisstation bestimmt, dass heterogene Netzaggregation freizugeben ist, wobei die Verbindungsumkonfigurations-Anforderungsnachricht verwendet wird, um anzuweisen, einen zweiten Funkträger zwischen dem UE und einer Zugangsnetzvorrichtung eines zweiten Kommunikationsnetzes herzustellen;
eine Trägerherstellungseinheit, ausgelegt zum Herstellen des zweiten Funkträgers mit der Zugangsnetzvorrichtung gemäß der Verbindungsumkonfigurations-Anforderungsnachricht, so dass die Basisstation Daten entsprechend dem zweiten Funkträger mit der Zugangsnetzvorrichtung austauscht; und
eine Aufteilungs- und Aggregiereinheit, die dafür ausgelegt ist, nachdem die Trägerherstellungseinheit den zweiten Funkträger herstellt, Aggregation oder Aufteilung an Daten entsprechend einem ersten Funkträger zwischen der Basisstation und dem Benutzergerät UE und den Daten entsprechend dem zweiten Funkträger auszuführen; wobei
die Daten, die dem zweiten Funkträger entsprechen und durch die Basisstation mit der Zugangsnetzvorrichtung ausgetauscht werden, Protokolldateneinheiten PDUs des "Packet Data Convergence Protocol" PDCP sind.

9. Benutzergerät nach Anspruch 8, wobei die Verbindungsumkonfigurations-Anforderungsnachricht ferner eine Abbildungsbeziehung zwischen einem Internetprotokoll- bzw. IP-Fluss und dem zweiten Funkträger führt.

10. Benutzergerät nach Anspruch 9, wobei, dass die Aufteilungs- und Aggregiereinheit dafür ausgelegt ist, nachdem die Trägerherstellungseinheit den zweiten Funkträger herstellt, Aufteilung an den Daten entsprechend dem ersten Funkträger zwischen der Basisstation und dem Benutzergerät UE und den Daten entsprechend dem zweiten Funkträger auszuführen, speziell Folgendes umfasst:
die Aufteilungs- und Aggregiereinheit ist ausgelegt zum Bestimmen eines ersten Internetprotokoll- bzw. IP-Flusses und eines zweiten IP-Flusses, die zur Basisstation gesendet werden müssen, wobei der zweite IP-Fluss in der Abbildungsbeziehung dem zweiten Funkträger entspricht; Ausführen von Einkapselsungsverarbeitung an Datenpaketen des zweiten IP-Flusses, um einen zweiten Teil eingekapselter Datenpakete zu erhalten; und Senden des zweiten Teils eingekapselter Datenpakete zu der Zugangsnetzvorrichtung über den zweiten Funkträger und Senden von Datenpaketen des ersten IP-Flusses zur Basisstation über den ersten Funkträger.

11. Benutzergerät nach Anspruch 9, wobei, dass die Aufteilungs- und Aggregiereinheit dafür ausgelegt ist, nachdem die Trägerherstellungseinheit den zweiten Funkträger herstellt, Aggregation an den Daten entsprechend dem ersten Funkträger zwischen der Basisstation und dem Benutzergerät UE und den Daten entsprechend dem zweiten Funkträger auszuführen, speziell Folgendes umfasst:
die Aufteilungs- und Aggregiereinheit ist ausgelegt zum Empfangen von Datenpaketen über den ersten Funkträger, die von einem vierten IP-Fluss sind und durch die Basisstation gesendet werden, und Empfangen eines dritten Teils eingekapselter Datenpakete, die durch die Zugangsnetzvorrichtung gesendet werden, über den zweiten Funkträger, wobei der dritte Teil eingekapselter Datenpakete erhalten wird, indem Einkapselungsverarbeitung durch die Zugangsnetzvorrichtung an einen dritten Teil von PDCP-PDUs entsprechend Datenpaketen eines dritten IP-Flusses ausgeführt wird, wobei der dritte IP-Fluss in der Abbildungsbeziehung dem zweiten Funkträger entspricht; Ausführen von Entkapselungsverarbeitung an Daten des vierten IP-Flusses, um einen vierten Teil von PDCP-PDUs zu erhalten, und Ausführen von Entkapselungsverarbeitung an dem dritten Teil eingekapselter Datenpakete, um den dritten Teil von PDCP-PDUs zu erhalten; und Ausführen von Aggregation an dem dritten Teil von PDCP-PDUs und dem vierten Teil von PDCP-PDUs.

12. Benutzergerät nach Anspruch 8, wobei, dass die Aufteilungs- und Aggregiereinheit dafür ausgelegt ist, nachdem die Trägerherstellungseinheit den zweiten Funkträger herstellt, Aufteilung an den Daten entsprechend dem ersten Funkträger zwischen der Basisstation und dem Benutzergerät UE und den Daten entsprechend dem zweiten Funkträger auszuführen, speziell Folgendes umfasst:
die Aufteilungs- und Aggregiereinheit ist ausgelegt zum Aufteilen von PDCP-PDUs , die zur Basisstation gesendet werden müssen, in einen fünften Teil von PDCP-PDUs und einen sechsten Teil von PDCP-PDUs; Ausführen von Einkapselungsverarbeitung an dem sechsten Teil von PDCP-PDUs, um einen sechsten Teil eingekapselter Datenpakete zu erhalten und einen fünften Teil eingekapselter Datenpakete nach Ausführen von Verarbeitung an dem fünften Teil von PDCP-PDUs zu erhalten; und Senden des sechsten Teils eingekapselter Datenpakete zu der Zugangsnetzvorrichtung über den zweiten Funkträger und Senden des fünften Teils eingekapselter Datenpakete zur Basisstation über den ersten Funkträger.

13. Benutzergerät nach Anspruch 8, wobei, dass die Aufteilungs- und Aggregiereinheit dafür ausgelegt ist, nachdem die Trägerherstellungseinheit den zweiten Funkträger herstellt, Aggregation an den Daten entsprechend dem ersten Funkträger zwischen der Basisstation und dem Benutzergerät UE und den Daten entsprechend dem zweiten Funkträger auszuführen, spezielle Folgendes umfasst:
die Aufteilungs- und Aggregiereinheit ist ausgelegt zum Empfangen eines achten Teils eingekapselter Datenpakete, die durch die Basisstation gesendet werden, über den ersten Funkträger und Empfangen eines siebten Teils eingekapselter Datenpakete, die durch die Zugangsnetzvorrichtung gesendet werden, über den zweiten Funkträger; Ausführen von Entkapselungsverarbeitung an dem achten Teil eingekapselter Datenpakete, um einen achten Teil von PDCP-PDUs zu erhalten, und Ausführen von Entkapselungsverarbeitung an dem siebten Teil eingekapselter Datenpakete, um einen siebten Teil von PDCP-PDUs zu erhalten; und Aggregieren des siebten Teils von PDCP-PDUs und des achten Teils von PDCP-PDUs .

## Revendications

1. Station de base, la station de base appartenant à un premier réseau de communication et comprenant :
une unité de division et d'agrégation (1110), conçue pour établir une première interface avec un dispositif réseau d'accès d'un second réseau de communication si elle détermine qu'une agrégation de réseaux hétérogènes doit être activée ; et
une unité de notification (1120), conçue pour, après l'établissement par l'unité de division et d'agrégation d'une première interface avec le dispositif réseau d'accès du second réseau de communication, notifier au dispositif réseau d'accès d'établir une seconde porteuse radio entre le dispositif réseau d'accès et un équipement d'utilisateur (UE), et notifier à l'UE d'établir la seconde porteuse radio ; et dans laquelle
l'unité de division et d'agrégation est en outre conçue pour échanger des données correspondant à la seconde porteuse radio avec le dispositif réseau d'accès par l'intermédiaire de la première interface après l'établissement de la seconde porteuse radio, et réaliser une agrégation ou une division sur les données correspondant à la seconde porteuse radio et sur les données correspondant à une première porteuse radio entre la station de base et l'UE ; et
les données qui correspondent à la seconde porteuse radio et qui sont échangées par l'unité de division et d'agrégation avec le dispositif réseau d'accès par l'intermédiaire de la première interface sont des unités de données de protocole (PDU) sur protocole de convergence de données de paquet (PDCP) ;
et dans laquelle :
l'unité de notification est spécifiquement conçue pour envoyer un message de négociation au dispositif réseau d'accès par l'intermédiaire d'une seconde interface, le message de négociation comprenant une information de plan de données de la station de base sur la première interface, et le message de négociation étant en outre utilisé pour donner l'instruction d'établir la seconde porteuse radio ; et l'unité de notification est en outre conçue pour envoyer à l'UE un message de demande de reconfiguration de connexion, le message de demande de reconfiguration de connexion étant utilisé pour donner l'instruction d'établir la seconde porteuse radio ; et
l'unité de notification est en outre conçue pour recevoir, par l'intermédiaire de la seconde interface, un message de validation généré par le dispositif réseau d'accès selon le message de négociation, le message de validation comprenant l'information de plan de données du dispositif réseau d'accès sur la première interface.

2. Station de base selon la revendication 1, dans laquelle le premier réseau de communication est un réseau d'évolution à long terme (LTE), et le second réseau de communication n'est pas un réseau LTE.

3. Station de base selon la revendication 1, comprenant en outre une première unité de détermination (1130),
la première unité de détermination étant conçue pour déterminer une relation de correspondance entre un flux sur protocole Internet (IP) et la seconde porteuse radio ;
et
l'unité de notification est en outre conçue pour ajouter la relation de correspondance au message de demande de reconfiguration de connexion.

4. Station de base selon la revendication 3, dans laquelle le fait que l'unité de division et d'agrégation soit en outre conçue pour échanger des données correspondant à la seconde porteuse radio avec le dispositif réseau d'accès par l'intermédiaire de la première interface après l'établissement de la seconde porteuse radio, et réaliser une agrégation sur les données correspondant à la seconde porteuse radio et sur les données correspondant à une première porteuse radio entre la station de base et l'UE, consiste spécifiquement en ce que :
l'unité de division et d'agrégation soit conçue pour recevoir, sur la première porteuse radio, des paquets de données qui appartiennent à un premier flux sur protocole Internet (IP) et qui sont envoyés par l'UE, et recevoir une deuxième partie de PDU PDCP en provenance du dispositif réseau d'accès par l'intermédiaire de la première interface, la deuxième partie de PDU PDCP étant obtenue en réalisant un traitement de décapsulation, par le dispositif réseau d'accès, sur une deuxième partie de paquets de données encapsulés envoyée par l'UE sur la seconde porteuse radio, la deuxième partie de paquets de données encapsulés étant obtenue en réalisant un traitement d'encapsulation sur des paquets de données d'un deuxième flux IP par l'UE, et le deuxième flux IP correspondant à la seconde porteuse radio dans la relation de correspondance ; réaliser un traitement sur les paquets de données du premier flux IP afin d'obtenir une première partie de PDU PDCP ; et réaliser une agrégation sur la première partie de PDU PDCP et la deuxième partie de PDU PDCP.

5. Station de base selon la revendication 3, dans laquelle le fait que l'unité de division et d'agrégation soit en outre conçue pour échanger des données correspondant à la seconde porteuse radio avec le dispositif réseau d'accès par l'intermédiaire de la première interface après l'établissement de la seconde porteuse radio, et réaliser une division sur les données correspondant à la seconde porteuse radio et sur les données correspondant à une première porteuse radio entre la station de base et l'UE, consiste spécifiquement en ce que :
l'unité de division et d'agrégation soit conçue pour acquérir un troisième flux IP et un quatrième flux IP qui doivent être transmis à l'UE, le troisième flux IP correspondant à la seconde porteuse radio dans la relation de correspondance ; réaliser un traitement sur les paquets de données du troisième flux IP afin d'obtenir une troisième partie de PDU PDCP ; et envoyer la troisième partie de PDU PDCP au dispositif réseau d'accès par l'intermédiaire de la première interface, et envoyer les paquets de données du quatrième flux IP à l'UE sur la première porteuse radio.

6. Dispositif réseau d'accès, le dispositif réseau d'accès appartenant à un second réseau de communication et comprenant :
une unité de communication sur réseau hétérogène, conçue pour établir une première interface avec une station de base d'un premier réseau de communication si la station de base détermine qu'une agrégation de réseaux hétérogènes doit être activée ;
une unité d'établissement de porteuse, conçue pour établir une seconde porteuse radio avec l'UE ; et
une unité de transmission de données, conçue pour transmettre des données avec l'UE sur la seconde porteuse radio ; et dans lequel
l'unité de communication sur réseau hétérogène est conçue pour échanger des données correspondant à la seconde porteuse radio avec la station de base par l'intermédiaire de la première interface, les données qui correspondent à la seconde porteuse radio et qui sont échangées avec la station de base par l'intermédiaire de la première interface étant des unités de données de protocole (PDU) sur protocole de convergence de données de paquet (PDCP) ;
le fait que l'unité de communication sur réseau hétérogène soit conçue pour établir une première interface avec une station de base d'un premier réseau de communication si la station de base détermine qu'une agrégation de réseaux hétérogènes doit être activée consiste spécifiquement en ce que : l'unité de communication sur réseau hétérogène soit conçue pour recevoir un message de négociation en provenance de la station de base par l'intermédiaire d'une seconde interface, générer un message de validation selon le message de négociation, et envoyer le message de validation à la station de base par l'intermédiaire de la seconde interface, le message de négociation comprenant une information de plan de données de la station de base sur la première interface, le message de négociation étant en outre utilisé pour donner l'instruction d'établir la seconde porteuse radio, et le message de validation comprenant une information de plan de données du dispositif réseau d'accès sur la première interface ; et
l'unité d'établissement de porteuse est spécifiquement conçue pour établir la seconde porteuse radio avec l'UE selon le message de négociation.

7. Dispositif réseau d'accès selon la revendication 6, dans lequel l'unité de transmission de données est spécifiquement conçue pour recevoir, sur la seconde porteuse radio, une deuxième partie de paquets de données encapsulés envoyée par l'UE, la deuxième partie de paquets de données encapsulés étant obtenue en réalisant un traitement d'encapsulation sur des paquets de données d'un deuxième flux sur protocole Internet (IP) par l'UE ; et dans lequel
le fait que l'unité de communication sur réseau hétérogène soit conçue pour échanger des données correspondant à la seconde porteuse radio avec la station de base par l'intermédiaire de la première interface consiste spécifiquement en ce que : l'unité de communication sur réseau hétérogène soit conçue pour réaliser un traitement de décapsulation sur la deuxième partie de paquets de données encapsulés afin d'obtenir une deuxième partie de PDU PDCP, et envoyer la deuxième partie de PDU PDCP à la station de base par l'intermédiaire de la première interface.

8. Équipement d'utilisateur, conçu pour communiquer avec la station de base selon l'une quelconque des revendications 1 à 5 et le dispositif réseau d'accès selon la revendication 6 ou 7, comprenant :
une unité de réception, conçue pour recevoir un message de demande de reconfiguration de connexion en provenance d'une station de base d'un premier réseau de communication si la station de base détermine qu'une agrégation de réseaux hétérogènes doit être activée, le message de demande de reconfiguration de connexion étant utilisé pour donner l'instruction d'établir une seconde porteuse radio entre l'UE et un dispositif réseau d'accès d'un second réseau de communication ; une unité d'établissement de porteuse, conçue pour établir la seconde porteuse radio avec le dispositif réseau d'accès selon le message de demande de reconfiguration de connexion, de sorte que la station de base échange des données correspondant à la seconde porteuse radio avec le dispositif réseau d'accès ; et
une unité de division et d'agrégation, conçue pour, après l'établissement de la seconde porteuse radio par l'unité d'établissement de porteuse, réaliser une agrégation ou une division sur les données correspondant à une première porteuse radio entre la station de base et l'équipement utilisateur (UE) et sur les données correspondant à la seconde porteuse radio ; et dans lequel
les données qui correspondent à la seconde porteuse radio et qui sont échangées par la station de base avec le dispositif réseau d'accès sont des unités de données de protocole (PDU) sur protocole de convergence de données de paquet (PDCP).

9. Équipement d'utilisateur selon la revendication 8, dans lequel le message de demande de reconfiguration de connexion transporte en outre une relation de correspondance entre un flux sur protocole Internet (IP) et la seconde porteuse radio.

10. Équipement d'utilisateur selon la revendication 9, dans lequel le fait que l'unité de division et d'agrégation soit conçue pour, après l'établissement de la seconde porteuse radio par l'unité d'établissement de porteuse, réaliser une division sur les données correspondant à la première porteuse radio entre la station de base et l'équipement utilisateur (UE) et sur les données correspondant en la seconde porteuse radio consiste spécifiquement en ce que :
l'unité de division et d'agrégation soit conçue pour déterminer un premier flux sur protocole Internet (IP) et un deuxième flux IP qui doivent être transmis à la station de base, le deuxième flux IP correspondant à la seconde porteuse radio dans la relation de correspondance ; réaliser un traitement d'encapsulation sur les paquets de données du deuxième flux IP afin d'obtenir une deuxième partie de paquets de données encapsulés ; et envoyer la deuxième partie de paquets de données encapsulés au dispositif réseau d'accès sur la seconde porteuse radio, et envoyer les paquets de données du premier flux IP à la station de base sur la première porteuse radio.

11. Équipement d'utilisateur selon la revendication 9, dans lequel le fait que l'unité de division et d'agrégation soit conçue pour, après l'établissement de la seconde porteuse radio par l'unité d'établissement de porteuse, réaliser une agrégation sur les données correspondant à la première porteuse radio entre la station de base et l'équipement utilisateur (UE) et sur les données correspondant en la seconde porteuse radio consiste spécifiquement en ce que :
l'unité de division et d'agrégation soit conçue pour recevoir, sur la première porteuse radio, des paquets de données qui appartiennent à un quatrième flux IP et qui sont envoyés par la station de base, et recevoir, sur la seconde porteuse radio, une troisième partie de paquets de données encapsulés envoyée par le dispositif réseau d'accès, la troisième partie de paquets de données encapsulés étant obtenue en réalisant un traitement d'encapsulation, par le dispositif réseau d'accès, sur une troisième partie de PDU PDCP correspondant à des paquets de données d'un troisième flux IP, le troisième flux IP correspondant à la seconde porteuse radio dans la relation de correspondance ; réaliser un traitement de décapsulation sur les données du quatrième flux IP afin d'obtenir une quatrième partie de PDU PDCP, et réaliser un traitement de décapsulation sur la troisième partie de paquets de données encapsulés afin d'obtenir la troisième partie de PDU PDCP ; et réaliser une agrégation sur la troisième partie de PDU PDCP et la quatrième partie de PDU PDCP.

12. Équipement d'utilisateur selon la revendication 8, dans lequel le fait que l'unité de division et d'agrégation soit conçue pour, après l'établissement de la seconde porteuse radio par l'unité d'établissement de porteuse, réaliser une division sur les données correspondant à la première porteuse radio entre la station de base et l'équipement utilisateur (UE) et sur les données correspondant à la seconde porteuse radio consiste spécifiquement en ce que :
l'unité de division et d'agrégation soit conçue pour diviser les PDU PDCP qui doivent être transmises à la station de base en une cinquième partie de PDU PDCP et en une sixième partie de PDU PDCP ; réaliser un traitement d'encapsulation sur la sixième partie de PDU PDCP afin d'obtenir une sixième partie de paquets de données encapsulés, et obtenir une cinquième partie de paquets de données encapsulés après la réalisation du traitement sur la cinquième partie de PDU PDCP ; et envoyer la sixième partie de paquets de données encapsulés au dispositif réseau d'accès sur la seconde porteuse radio, et envoyer la cinquième partie de paquets de données encapsulés à la station de base sur la première porteuse radio.

13. Équipement d'utilisateur selon la revendication 8, dans lequel le fait que l'unité de division et d'agrégation soit conçue pour, après l'établissement de la seconde porteuse radio par l'unité d'établissement de porteuse, réaliser une agrégation sur les données correspondant à la première porteuse radio entre la station de base et l'équipement utilisateur (UE) et sur les données correspondant à la seconde porteuse radio consiste spécifiquement en ce que :
l'unité de division et d'agrégation soit conçue pour recevoir, sur la première porteuse radio, une huitième partie de paquets de données encapsulés envoyée par la station de base, et recevoir, sur la seconde porteuse radio, une septième partie de paquets de données encapsulés envoyée par le dispositif réseau d'accès ; réaliser un traitement de décapsulation sur la huitième partie de paquets de données encapsulés afin d'obtenir une huitième partie de PDU PDCP, et réaliser un traitement de décapsulation sur la septième partie de paquets de données encapsulés afin d'obtenir une septième partie de PDU PDCP ; et agréger la septième partie de PDU PDCP et la huitième partie de PDU PDCP.
